# EUROPEAN PATENT SPECIFICATION

(11) **EP 3 975 151 B1**
(45) Date of publication and mention of the grant of the patent: **09.12.2026**
(21) Application number: 20808827.8
(22) Date of filing: 15.05.2020
(51) Int. Cl.: G08G 1/04, G06T 7/00, G08G 1/09

(54) **OBJECT RECOGNITION DEVICE**
OBJEKTERKENNUNGSVORRICHTUNG
DISPOSITIF DE RECONNAISSANCE D'OBJET

(30) Priority: 23.05.2019 JP 2019097048
(43) Date of publication of application: 30.03.2022
(73) Proprietor: Astemo, Ltd., Tokyo 100-0004 (JP)
(72) Inventor: ENDO Takeshi, Tokyo 100-8280 (JP); NAGASAKI Takeshi, Hitachinaka-shi, Ibaraki 312-8503 (JP)
(74) Representative: MERH-IP Matias Erny Reichl Hoffmann Patentanwälte PartG mbB
(86) International application number: PCT/JP2020/019399
(87) International publication number: WO 2020/235462

(56) References cited:
- EP-A1- 3 483 832
- JP-A- 2005 092 857
- JP-A- 2005 092 861
- JP-A- 2014 203 114
- JP-A- 2015 192 430
- JP-A- 2017 027 220
- JP-A- 2018 125 585
- JP-A- 2019 146 012
- JP-A- 2020 038 629
- US-A1- 2018 137 375

## Description

### Technical Field

The present invention relates to an object recognition device.

### Background Art

In order to realize automatic driving and prevent traffic accidents, there is a great interest in an object recognition technique that recognizes an object such as a road sign for a traveling vehicle, and uses regulation information based on the recognition result for a notification to a driver or a vehicle control. There are various types of road signs, and among them, there is an electric sign which is installed on a highway, a construction section, or the like and in which a character part emits light. In an object recognition device used for recognizing a road sign, it is necessary to correctly recognize such an electric sign.

Regarding the recognition of an electric sign, for example, in PTL 1, recognition is known which focuses on the property that when a VMS sign using a light emitter, which is a type of an electric sign, is imaged with a short exposure time, the VMS sign is imaged with a part thereof missing. An object recognition device disclosed in PTL 1 detects an image region in which a VMS sign is imaged, from a first image imaged in a first exposure time, captures a second image in a second exposure time, which is longer than the first exposure time and in which the VMS sign is not missing, and recognizes display content of the VMS sign using the second image of a region corresponding to the image region detected from the first image.
PTL 2 discloses onboard environment recognition device which has an imaging unit for imaging, using a camera installed in the vehicle, at a wider-angle range than the headlight illumination range, an in-illumination/out-of-illumination exposure adjustment unit, and a recognition unit.
PTL3 discloses an image processing device which is equipped with an image acquisition unit, an object candidate detection unit, and an object recognition.

### Citation List

### Patent Literature

PTL 1: JP 2014-153167 A
PTL 2: US 2018/137375 A1
PTL 3: EP 3 483 832 A1

### Summary of Invention

### Technical Problem

In the object recognition device of PTL 1, since detection processing of the VMS sign is performed on the basis of the information of the first image in which the character part is missing, the size of the sign cannot be accurately specified. Therefore, in the recognition processing of the VMS sign using the second image, it is necessary to use a large number of templates having different sizes, and there is a problem that the processing time required for recognition is increased and the recognition accuracy is decreased.

In view of such a problem, an object of the present invention is to provide a technique capable of accurately recognizing an object such as a road sign in a short processing time.

### Solution to Problem

The above cited problem is solved in accordance with the appended claims. In particular, an object recognition device includes an exposure amount determination unit that determines a first exposure image, and a second exposure amount smaller than the first exposure amount; an image acquisition unit that acquires a first exposure image captured with the first exposure amount, and a second exposure image captured with the second exposure amount; a light source detection unit that detects a light source region from the first exposure image; a size specifying unit that specifies a size of an object as a recognition target on the basis of the light source region detected by the light source detection unit; a recognition candidate extraction unit that extracts a recognition candidate as a candidate for a region where the object is present, from the second exposure image on the basis of a position of the light source region detected by the light source detection unit and the size of the object specified by the size specifying unit; and a recognition processing unit that performs recognition processing regarding the object on the recognition candidate extracted by the recognition candidate extraction unit.

### Advantageous Effects of Invention

According to the present invention, it is possible to accurately recognize an object in a short processing time.

### Brief Description of Drawings

[FIG. 1] FIG. 1 is a functional block diagram illustrating a configuration of an object recognition device according to a first embodiment of the present invention.
[FIG. 2] FIG. 2 is a diagram illustrating a scene for describing an operation of the object recognition device according to the first embodiment of the present invention.
[FIG. 3] FIG. 3 is a flowchart illustrating a flow of processing of the object recognition device according to the first embodiment of the present invention.
[FIG. 4] FIG. 4 is a diagram illustrating an example of a first exposure image.
[FIG. 5] FIG. 5 is a diagram illustrating an example of a second exposure image.
[FIG. 6] FIG. 6 is a diagram illustrating an example of a recognition candidate.
[FIG. 7] FIG. 7 is a functional block diagram illustrating a configuration of an object recognition device according to a second embodiment of the present invention.
[FIG. 8] FIG. 8 is a flowchart illustrating a flow of processing of the object recognition device according to the second embodiment of the present invention.
[FIG. 9] FIG. 9 is a diagram illustrating an example of size information.
[FIG. 10] FIG. 10 is a functional block diagram illustrating a configuration of an object recognition device according to a third embodiment of the present invention.
[FIG. 11] FIG. 11 is a flowchart illustrating a flow of processing of the object recognition device according to the third embodiment of the present invention.
[FIG. 12] FIG. 12 is a diagram illustrating an example of luminance information.
[FIG. 13] FIG. 13 is a functional block diagram illustrating a configuration of an object recognition device according to a fourth embodiment of the present invention.
[FIG. 14] FIG. 14 is a flowchart illustrating a flow of processing of the object recognition device according to the fourth embodiment of the present invention.
[FIG. 15] FIG. 15 is a flowchart of three-dimensional position calculation processing.
[FIG. 16] FIG. 16 is a flowchart of object position prediction processing.
[FIG. 17] FIG. 17 is a functional block diagram illustrating a configuration of an object recognition device according to a fifth embodiment of the present invention.
[FIG. 18] FIG. 18 is a flowchart illustrating a flow of processing of the object recognition device according to the fifth embodiment of the present invention.
[FIG. 19] FIG. 19 is a flowchart of recognition candidate re-extraction processing.
[FIG. 20] FIG. 20 is a diagram illustrating an example of a second exposure image and a recognition candidate after enlargement.
[FIG. 21] FIG. 21 is a diagram illustrating an example of a recognition candidate after binarization processing and a projection histogram.

### Description of Embodiments

Hereinafter, embodiments of the present invention will be described in detail.

### [First Embodiment]

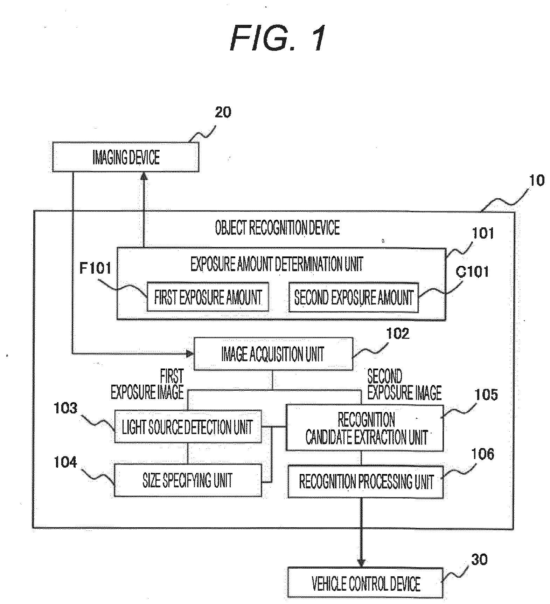

FIG. 1 is a functional block diagram illustrating a configuration of an object recognition device according to a first embodiment of the present invention. As illustrated in FIG. 1, an object recognition device 10 of the present embodiment is connected to an imaging device 20 and a vehicle control device 30, and includes an exposure amount determination unit 101, an image acquisition unit 102, a light source detection unit 103, a size specifying unit 104, a recognition candidate extraction unit 105, and a recognition processing unit 106. The object recognition device 10 is configured using a computer having, for example, an arithmetic device such as a CPU and a storage device such as a ROM, a RAM, and a flash memory, and is operated as each functional block described above by executing a control program stored in the storage device by the arithmetic device. Note that some or all of the functions of the object recognition device 10 may be configured using hardware such as an FPGA.

The imaging device 20 is a camera mounted on a vehicle, and captures an image of a landscape around the vehicle, for example, in front of the vehicle. Hereinafter, the vehicle on which the imaging device 20 is mounted is referred to as a "host vehicle". The imaging device 20 outputs the captured image to the object recognition device 10 at a predetermined frame rate, for example. The image output from the imaging device 20 is input to the image acquisition unit 102 in the object recognition device 10.

The exposure amount determination unit 101 calculates and determines an exposure amount when the imaging device 20 captures an image, and outputs the exposure amount to the imaging device 20. The exposure amount determined by the exposure amount determination unit 101 is a physical quantity for adjusting the brightness of the image captured by the imaging device 20, and corresponds to, for example, an exposure time, an analog gain value, an F-number of a lens, and the like.

In the present embodiment, the exposure amount determination unit 101 is able to determine two types of exposure amounts for the imaging device 20. In FIG. 1, two types of exposure amounts determined by the exposure amount determination unit 101 are illustrated as a first exposure amount F101 and a second exposure amount C101, respectively. Here, the first exposure amount F101 represents an exposure amount with which the imaging device 20 is able to capture a brighter image than the second exposure amount C101. That is, it is assumed that the first exposure amount F101 is larger than the second exposure amount C101, and conversely, the second exposure amount C101 is smaller than the first exposure amount F101, and these exposure amounts are determined by the exposure amount determination unit 101.

Note that, in the present embodiment, an example in which an object to be recognized by the object recognition device 10 is an electric sign will be described. The electric sign is a road sign having a light emitting portion using a light emitting element in a character part or the like, and is installed, for example, on a highway, a construction section, or the like. In this case, the exposure amount determination unit 101 determines the first exposure amount F101 and the second exposure amount C101 on the basis of the exposure amount with which at least a part of the light emitting portion of the electric sign is pixel saturated when the imaging device 20 images the electric sign that is the object as the recognition target. Specifically, for example, an exposure amount with which a part or all of the pixels corresponding to the light emitting portion are saturated at the time of imaging and the luminance value indicates the maximum value, that is, an exposure amount with which overexposure occurs is determined as the first exposure amount F101. In addition, an exposure amount with which all the pixels corresponding to the light emitting portion are not saturated and a part or all of the pixels are not missing (blackout) is determined as the second exposure amount C101. These exposure amounts can be calculated based on, for example, the brightness of the road surface.

Note that, although a case where the object to be recognized by the object recognition device 10 is an electric sign will be described below, another object may be used as the recognition target. For example, various objects having a high-luminance light emitting portion, such as a preceding vehicle having a light emitting portion such as a brake lamp, a following vehicle having a light emitting portion such as a headlight, a traffic light, and various electric bulletin boards can be recognized by the object recognition device 10.

The image acquisition unit 102 acquires, from the imaging device 20, two types of images respectively captured by the imaging device 20 with the first exposure amount F101 and second exposure amount C101 that are determined by the exposure amount determination unit 101. Then, the image captured with the first exposure amount F101 is output to the light source detection unit 103 as a first exposure image, and the image captured with the second exposure amount C101 is output to the recognition candidate extraction unit 105 as a second exposure image.

The light source detection unit 103 detects a light source region corresponding to the light emitting portion of the electric sign, from the first exposure image that is captured by the imaging device 20 with the first exposure amount F101 and is acquired by the image acquisition unit 102. Here, as described above, since the first exposure amount F101 is set as an exposure amount with which pixel saturation occurs at the time of imaging, it is possible to detect a region of pixels having a luminance value equal to or greater than a predetermined value in the first exposure image, as a light source region. Specifically, for example, a region having a circular shape, an elliptical shape, a rectangular shape, or the like present in the first exposure image is separated from other background regions using a known technique such as Hough transform or Maximally Stable Extremal Regions (MSER). Then, it is determined whether or not a predetermined number or more of pixels having a predetermined brightness or higher are present in the separated region, and in a case where the predetermined number or more of pixels having a predetermined brightness or higher are present, the region is detected as a light source region. When the light source region is detected in this way, the light source detection unit 103 acquires information such as a center position, a width, and a height of the light source region, and outputs the information to the size specifying unit 104.

The size specifying unit 104 specifies the size of the object to be recognized by the object recognition device 10 on the basis of the light source region detected by the light source detection unit 103. Specifically, the size of the object including the light emitting portion on the image is estimated on the basis of the information of the center position, the width, and the height of the light source region output from the light source detection unit 103, and thereby the size of the object is specified. At this time, the size of the object may be specified by applying a predetermined magnification to each of the width and height of the light source region according to the type of the object as the recognition target. In a case where the object as the recognition target is the electric sign as described above, since the size relationship between the light emitting portion and the electric sign is known, the size of the electric sign in the image can be easily and accurately specified on the basis of the size of the light source region detected from the first exposure image.

The recognition candidate extraction unit 105 extracts a recognition candidate that is a candidate for the region where the object is present, from the second exposure image which is captured with the second exposure amount C101 by the imaging device 20 and is acquired by the image acquisition unit 102, on the basis of the position of the light source region detected by the light source detection unit 103 and the size of the object specified by the size specifying unit 104. Specifically, for example, by using the center position of the light source region detected by the light source detection unit 103 and the size of the object on the image specified by the size specifying unit 104, the region corresponding to the center position and the size on the second exposure image is extracted as the recognition candidate. Furthermore, a scanning region expanded by multiplying the size calculated by the size specifying unit 104 by a predetermined magnification may be set around the light source position detected by the light source detection unit 103, and each region when a frame of the size calculated by the size specifying unit 104 is scanned at predetermined intervals in a horizontal direction and a vertical direction with respect to the scanning region may be extracted as the recognition candidate. As described above, the recognition candidate extraction unit 105 can extract and output an arbitrary number of recognition candidates from the second exposure image.

The recognition processing unit 106 performs predetermined recognition processing regarding the object as the recognition target, on the recognition candidate extracted from the second exposure image by the recognition candidate extraction unit 105. Here, recognition processing for recognizing the type of the object and a display content in the object is performed on the recognition candidate. In this recognition processing, for example, in a case where the object as the recognition target is an electric sign, template matching processing using a template image of the electric sign is performed, and the type and display content of the electric sign associated with the template image having the highest correlation can be acquired as a recognition result. In addition, the type and display content of the object may be determined by a statistical method using machine learning based on a large number of images obtained by imaging the object as the recognition target, and may be acquired as the recognition result. In addition to this, as long as an appropriate recognition result can be obtained for the object as the recognition target, the recognition processing can be performed using an arbitrary processing method.

The vehicle control device 30 controls the host vehicle on the basis of the recognition result of the object output from the object recognition device 10. For example, in a case where the object as the recognition target is an electric sign, a traffic regulation content instructed by the electric sign can be displayed on a display installed in the host vehicle and presented to the driver, or a traveling speed of the host vehicle can be controlled.

### (Operation Example)

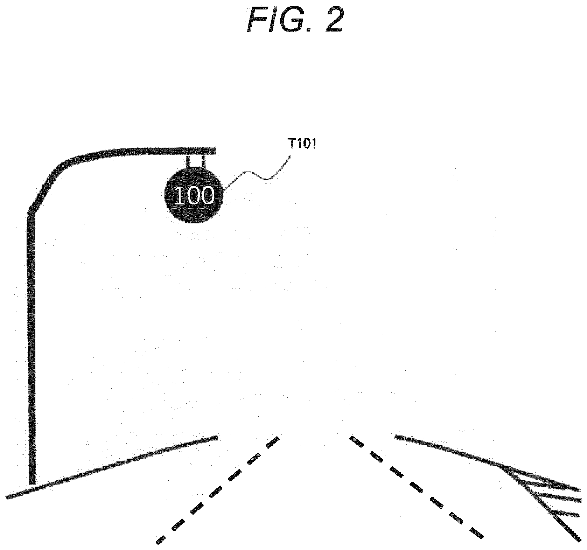

Next, the operation of the object recognition device 10 of the present embodiment described above will be described using the operation in the scene illustrated in FIG. 2 as an example. FIG. 2 illustrates a scene where an electric sign is installed in front of the host vehicle. In FIG. 2, an electric sign T101 is a sign indicating that the maximum speed limit is 100 km/h.

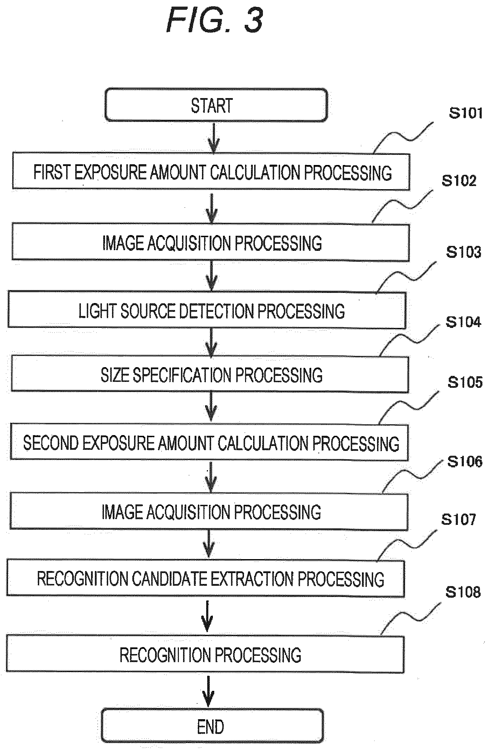

FIG. 3 is a flowchart illustrating a flow of processing of the object recognition device 10 according to the first embodiment of the present invention. The object recognition device 10 of the present embodiment is mounted on a vehicle, and performs the processing illustrated in the flowchart of FIG. 3 at predetermined processing cycles by, for example, an arithmetic device such as a CPU. Hereinafter, a specific operation example of the object recognition device 10 in the scene of FIG. 2 will be described with reference to the flowchart of FIG. 3.

According to the flowchart of FIG. 3, the object recognition device 10 sequentially performs first exposure amount calculation processing (S101), image acquisition processing (S102), light source detection processing (S103), size specification processing (S104), second exposure amount calculation processing (S105), image acquisition processing (S106), recognition candidate extraction processing (S107), and recognition processing (S108), and thereby recognizes the type and display contents of the electric sign as the recognition target. Hereinafter, each processing content will be described.

In step S101, the exposure amount determination unit 101 calculates the first exposure amount F101. Here, as described above, the exposure amount with which at least a part of the light emitting portion of the electric sign which is the object as the recognition target is pixel saturated at the time of imaging by the imaging device 20 is calculated as the first exposure amount F101.

In step S102, the image acquisition unit 102 acquires an image captured by the imaging device 20 with the first exposure amount F101 determined in step S101, from the imaging device 20 to set the image as a first exposure image.

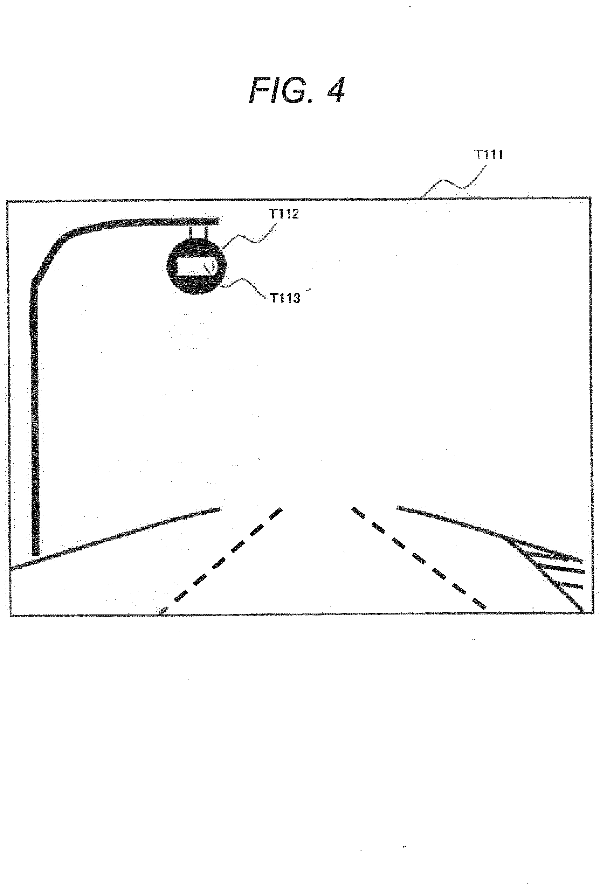

FIG. 4 is a diagram illustrating an example of the first exposure image acquired in step S102. A first exposure image T111 illustrated in FIG. 4 includes an image region T112 corresponding to the electric sign T101 in FIG. 2. In the image region T112, overexposure due to pixel saturation occurs in an image region T113 corresponding to the light emitting portion of the electric sign T101.

In step S103, the light source detection unit 103 detects the light source region from the first exposure image acquired in step S102. Here, the image region T113 in the first exposure image T111 in FIG. 4 is detected as the light source region, and information of the center position, width, and height thereof is calculated.

In step S104, the size specifying unit 104 specifies the size of the electric sign that is the object to be recognized by the object recognition device 10, on the basis of the light source region detected in step S103. Here, for example, by multiplying the height and the width of the image region T113 detected as the light source region by a predetermined magnification, the size of the object is specified from the light source region. Note that the magnification at this time can be set in advance according to the type of the object as the recognition target.

In step S105, the exposure amount determination unit 101 calculates the second exposure amount C101. Here, as described above, the exposure amount with which pixel saturation does not occur in the light emitting portion of the electric sign which is the object as the recognition target, at the time of imaging by the imaging device 20 is calculated as the second exposure amount C101.

In step S106, the image acquisition unit 102 acquires an image captured by the imaging device 20 with the second exposure amount C101 determined in step S105, from the imaging device 20 to set the image as a second exposure image.

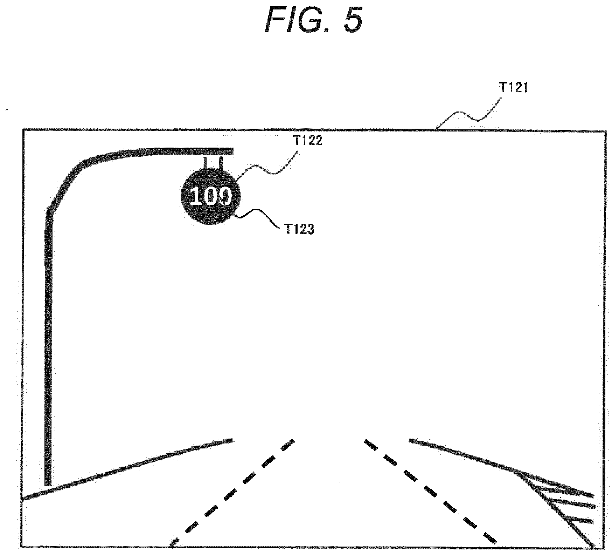

FIG. 5 is a diagram illustrating an example of the second exposure image acquired in step S106. A second exposure image T121 illustrated in FIG. 5 includes an image region T122 corresponding to the electric sign T101 in FIG. 2. In the image region T122, unlike the image region T113 in FIG. 4, overexposure due to the pixel saturation does not occur in an image region T123 corresponding to the light emitting portion of the electric sign T101.

In step S107, the recognition candidate extraction unit 105 extracts a recognition candidate for performing the recognition processing, from the second exposure image acquired in step S106. Here, a region to be extracted as the recognition candidate in the second exposure image is determined on the basis of the center position of the light source region detected in step S103 and the size (height, width) of the electric sign specified in step S104.

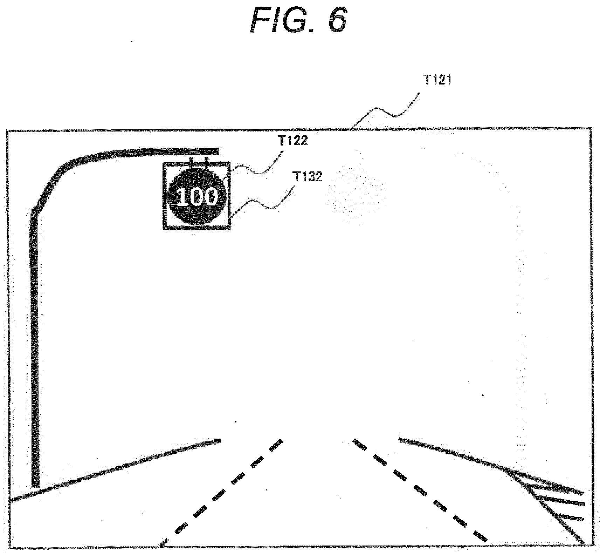

FIG. 6 is a diagram illustrating an example of a recognition candidate extracted in step S107. The second exposure image T121 illustrated in FIG. 6 is the same as that illustrated in FIG. 5. In the recognition candidate extraction processing in step S107, a recognition candidate T132 is set around the image region T122 corresponding to the electric sign T101 in the second exposure image T121, and is extracted. Here, the center position of the recognition candidate T132 is set from the center position of the light source region detected in step S103. In addition, the height and width of the recognition candidate T132 are set from the height and width representing the size of the electric sign specified in step S104, respectively.

In step S108, the recognition processing unit 106 performs recognition processing on the recognition candidate extracted in step S107. Here, for example, the template matching processing is performed using a template image having the same size as the extracted recognition candidate, and a template image having the highest correlation is specified among the plurality of template images. As a result, it is recognized that the image region extracted as the recognition candidate T132 is an image of the electric sign T101, and it is recognized that the type of the electric sign T101 is a road sign with the maximum speed limit, and the display content indicates that the maximum speed is 100 km/h.

As described above, for the object having a high-luminance light emitting portion such as an electric sign, the object recognition device 10 of the present embodiment performs the recognition processing by estimating the size of the object from the image captured using the exposure amount with which at least a part of the light emitting portion is pixel saturated. As a result, the size of the template image used for the recognition processing can be narrowed down according to the size of the object, so that the processing time can be reduced. As a result, it is possible to accurately recognize the object in a short processing time.

According to the first embodiment of the present invention described above, the following operational effects are achieved.
(1) The object recognition device 10 includes the exposure amount determination unit 101, the image acquisition unit 102, the light source detection unit 103, the size specifying unit 104, the recognition candidate extraction unit 105, and the recognition processing unit 106. The exposure amount determination unit 101 determines the first exposure amount F101 and the second exposure amount C101 smaller than the first exposure amount F101 (steps S101 and S105), and the image acquisition unit 102 acquires the first exposure image T111 captured with the first exposure amount F101 and the second exposure image T121 captured with the second exposure amount C101 (steps S102 and S106). The light source detection unit 103 detects the light source region (image region T113) from the first exposure image T111 (step S103). The size specifying unit 104 specifies the size of the object (electric sign T101) as the recognition target, on the basis of the light source region detected by the light source detection unit 103 (step S104). The recognition candidate extraction unit 105 extracts the recognition candidate T132 that is a candidate for the region where the object is present, from the second exposure image T121 on the basis of the position of the light source region detected by the light source detection unit 103 and the size of the object specified by the size specifying unit 104 (step S107). The recognition processing unit 106 performs the recognition processing regarding the object, on the recognition candidate T132 extracted by the recognition candidate extraction unit 105 (step S108). With this configuration, since the recognition processing can be performed by extracting the recognition candidate according to the size of the object as the recognition target, from the captured image of the camera, it is possible to accurately recognize the object in a short processing time.
(2) The exposure amount determination unit 101 determines the first exposure amount F101 and the second exposure amount C101 on the basis of the exposure amount with which at least a part of the light emitting portion of the object as the recognition target is pixel saturated at the time of imaging. Specifically, in step S101, the exposure amount with which at least a part of the light emitting portion is pixel saturated at the time of imaging by the imaging device 20 is determined as the first exposure amount F101, and in step S105, the exposure amount with which pixel saturation does not occur in the light emitting portion at the time of imaging by the imaging device 20 is determined as the second exposure amount C101. With this configuration, the exposure amount appropriate for capturing an image from which the light source region is easily detected can be determined as the first exposure amount F101, and the exposure amount appropriate for capturing an image on which the recognition processing is easily performed can be determined as the second exposure amount C101.

### [Second Embodiment]

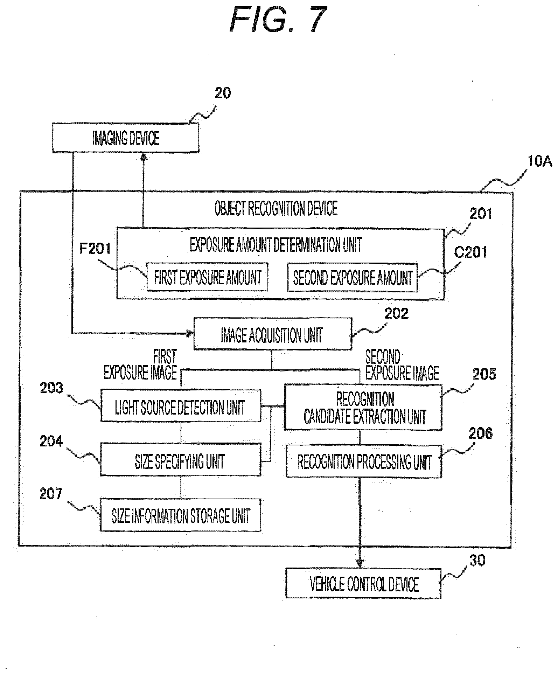

Next, a second embodiment of the present invention will be described. FIG. 7 is a functional block diagram illustrating a configuration of an object recognition device according to the second embodiment of the present invention. As illustrated in FIG. 7, an object recognition device 10A of the present embodiment is connected to the imaging device 20 and the vehicle control device 30, similar to the object recognition device 10 according to the first embodiment described with reference to FIG. 1. The object recognition device 10A of the present embodiment includes an exposure amount determination unit 201, an image acquisition unit 202, a light source detection unit 203, a size specifying unit 204, a recognition candidate extraction unit 205, a recognition processing unit 206, and a size information storage unit 207. The object recognition device 10A is configured using a computer having, for example, an arithmetic device such as a CPU and a storage device such as a ROM, a RAM, and a flash memory, and is operated as each functional block described above by executing a control program stored in the storage device by the arithmetic device. Note that some or all of the functions of the object recognition device 10A may be configured using hardware such as an FPGA.

Similar to the exposure amount determination unit 101 in FIG. 1, the exposure amount determination unit 201 calculates two types of exposure amounts for controlling the brightness of the imaging device 20, that is, a first exposure amount F201 and a second exposure amount C201, and outputs these calculated exposure amounts to the imaging device 20.

Similar to the image acquisition unit 102 in FIG. 1, the image acquisition unit 202 acquires, as the first exposure image and the second exposure image, two types of images respectively captured by the imaging device 20 with the first exposure amount F201 and the second exposure amount C201 that are determined by the exposure amount determination unit 201.

The light source detection unit 203 detects the light source region from the first exposure image, and outputs the detection result to the size specifying unit 204 and the recognition candidate extraction unit 205. The size specifying unit 204 specifies the size of the object to be recognized by the object recognition device 10A, from each piece of information of the center position, the width, and the height of the light source region indicated by the output of the light source detection unit 203, and outputs the size to the recognition candidate extraction unit 205. At this time, the light source detection unit 203 estimates the size of the object on the image by referring to the size information stored in the size information storage unit 207, and specifies the size. The details of the size information stored in the size information storage unit 207 will be described later.

Similar to the recognition candidate extraction unit 105 in FIG. 1, the recognition candidate extraction unit 205 extracts the recognition candidate from the second exposure image on the basis of the position of the light source region detected by the light source detection unit 203 and the size of the object specified by the size specifying unit 204. Similar to the recognition processing unit 106 in FIG. 1, the recognition processing unit 206 performs recognition processing on the recognition candidate extracted from the second exposure image by the recognition candidate extraction unit 205, and recognizes the type of the object and the display content in the object.

The size information storage unit 207 stores size information indicating the relationship between the light emitting portion of the object as the recognition target and the size of the object. This size information can be expressed, for example, for each of the width and height of the object, as a magnification of the size of the object relative to the light emitting portion. However, the size information is not limited to the width and height of the object. For example, in a case where the object size is defined as the radius from the center position, the magnification with respect to the radius can be stored as the size information in the size information storage unit 207. In addition to this, any information regarding the relationship between the light emitting portion and the size of the object can be stored as the size information in the size information storage unit 207.

Note that the size information stored in the size information storage unit 207 may be rewritable in a stage before shipment such as a production line or the like of a factory in a case where a destination of the object recognition device 10A is determined. For example, in the case of the object recognition device 10A to be shipped to the domestic market, the size information regarding the light emitting portion and the size of an object such as an electric sign arranged in the country is stored in the size information storage unit 207. On the other hand, in the case of the object recognition device 10A to be shipped to another area, the size information corresponding to the destination is stored.

### (Operation Example)

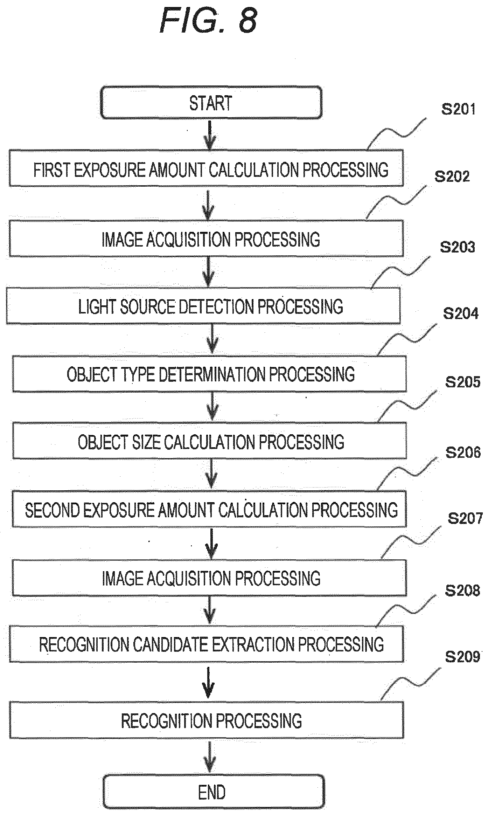

Next, an operation example of the object recognition device 10A of the present embodiment described above will be described. FIG. 8 is a flowchart illustrating a flow of processing of the object recognition device 10A according to the second embodiment of the present invention. The object recognition device 10A of the present embodiment is mounted on a vehicle, and performs the processing illustrated in the flowchart of FIG. 8 at predetermined processing cycles by, for example, an arithmetic device such as a CPU. Hereinafter, a specific operation example of the object recognition device 10A will be described with reference to the flowchart of FIG. 8.

According to the flowchart of FIG. 8, the object recognition device 10A sequentially performs first exposure amount calculation processing (S201), image acquisition processing (S202), light source detection processing (S203), object type determination processing (S204), object size calculation processing (S205), second exposure amount calculation processing (S206), image acquisition processing (S207), recognition candidate extraction processing (S208), and recognition processing (S209), and thereby recognizes the type and display contents of the electric sign as the recognition target. Hereinafter, each processing content will be described.

In steps S201 to S203, processing similar to the processing in steps S101 to S103 in FIG. 3 is performed by the exposure amount determination unit 201, the image acquisition unit 202, and the light source detection unit 203, respectively.

In step S204, the size specifying unit 104 determines which object type of size information is referred to in the size information stored in the size information storage unit 207 on the basis of the light source region detected in step S203. Here, for example, it is determined which type of object corresponds to the object among the objects of which the size information is stored for each type in the size information storage unit 207 on the basis of the size, brightness, color, shape, and the like of the light source region. In the present operation example, since the object as the recognition target is the electric sign, the result that the object type is the electric sign is obtained by the object type determination processing in step S204.

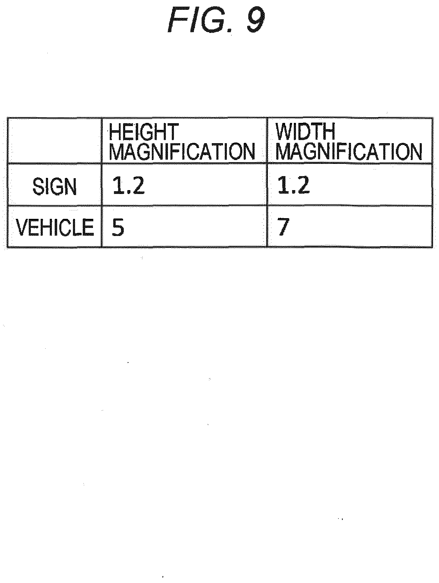

In step S205, the size specifying unit 104 calculates the size of the object to be recognized by the object recognition device 10A by referring to the size information stored in the size information storage unit 207 on the basis of the determination result in step S204. Here, for example, the size of the object is calculated with reference to the size information illustrated in the table of FIG. 9.

FIG. 9 is a diagram illustrating an example of the size information stored in the size information storage unit 207. In the size information of FIG. 9, the magnifications of the height and the width with respect to the object including the light emitting portion are described in a table format for each type of object. Specifically, the second row describes size information on the road sign, and the third row describes size information on the vehicle.

In the present operation example, in the object type determination processing (S204), the determination result that the type of the object as the recognition target is the electric sign is obtained as described above. Therefore, in step S205, by referring to the portion of the road sign in the size information of FIG. 9, it can be seen that both the magnifications of the electric sign with respect to the width and the height of the light emitting portion detected as the light source region are 1.2 times. Therefore, the size of the electric sign in the captured image can be specified by multiplying the width and height of the light source region acquired in the light source detection processing (S203) by the magnifications illustrated in FIG. 9, respectively.

In steps S206 to S209, processing similar to the processing in steps S105 to S108 in FIG. 3 is performed by the exposure amount determination unit 201, the image acquisition unit 202, the recognition candidate extraction unit 205, and the recognition processing unit 206, respectively.

As described above, in the object recognition device 10A of the present embodiment, the size of the object as the recognition target can be estimated more accurately by using the relationship between the light emitting portion and the size created in advance. As a result, it is possible to select the region where the recognition processing is to be performed, and it is possible to improve the recognition accuracy more accurately.

According to the second embodiment of the present invention described above, in addition to the operational effects of (1) and (2) described in the first embodiment, the following operational effects of (3) are further achieved.

(3) The object recognition device 10A further includes the size information storage unit 207 in which size information indicating the relationship between the light emitting portion of the object and the size of the object is stored for each type of the object. The size specifying unit 24 specifies the size of the object by referring to the size information stored in the size information storage unit 207 on the basis of the size of the light source region detected by the light source detection unit 203. With this configuration, the size of the object as the recognition target can be estimated more accurately, and thus it is possible to improve the recognition accuracy of the object.

### [Third Embodiment]

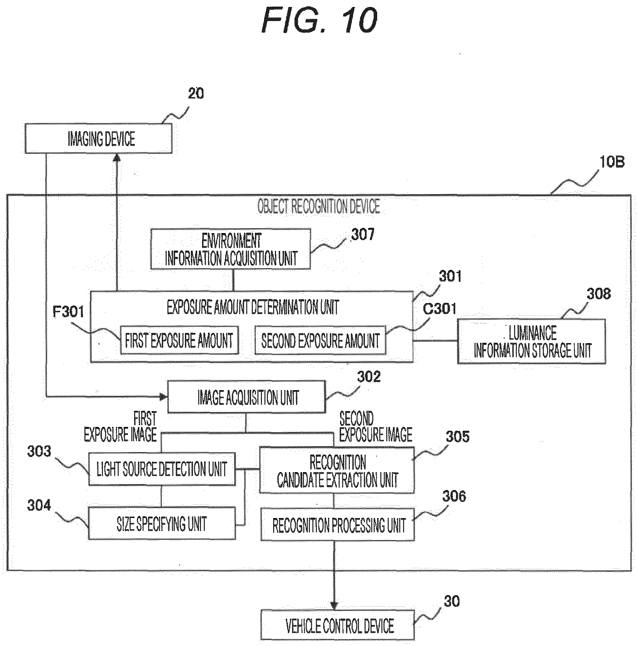

Next, a third embodiment of the present invention will be described. FIG. 10 is a functional block diagram illustrating a configuration of an object recognition device according to the third embodiment of the present invention. As illustrated in FIG. 10, an object recognition device 10B of the present embodiment is connected to the imaging device 20 and the vehicle control device 30, similar to the object recognition device 10 according to the first embodiment described with reference to FIG. 1. The object recognition device 10B of the present embodiment includes an exposure amount determination unit 301, an image acquisition unit 302, a light source detection unit 303, a size specifying unit 304, a recognition candidate extraction unit 305, a recognition processing unit 306, an environment information acquisition unit 307, and a luminance information storage unit 308. The object recognition device 10B is configured using a computer having, for example, an arithmetic device such as a CPU and a storage device such as a ROM, a RAM, and a flash memory, and is operated as each functional block described above by executing a control program stored in the storage device by the arithmetic device. Note that some or all of the functions of the object recognition device 10B may be configured using hardware such as an FPGA.

The environment information acquisition unit 307 acquires environment information around the object recognition device 10B, and outputs the environment information to the exposure amount determination unit 301. Here, the environment information acquired by the environment information acquisition unit 307 is, for example, information on a time zone or a location (country, region, or the like) in which the object recognition device 10B is operating, and corresponds to information indicating a traveling environment of the host vehicle on which the object recognition device 10B is mounted. For example, the environment information acquisition unit 307 is connected to a navigation system (not illustrated), and can acquire environment information by acquiring information on a location and a time zone from the navigation system. The navigation system receives, for example, a global positioning system (GPS) signal, and specifies the location corresponding to its own current position by comparing a position indicated by the received GPS signal with a map. In addition, it is possible to specify the time zone by detecting the current time from the received GPS signal. Note that the environment information acquisition unit 307 can acquire the environment information using any other means.

The luminance information storage unit 308 stores luminance information regarding the brightness of the light emitting portion of the object as the recognition target. In this luminance information, for example, the brightness of the light emitting portion is set for each location or time zone. Note that the luminance information can be represented by various physical quantities such as luminance [cd/m²] and illuminance [lx].

The exposure amount determination unit 301 determines a first exposure amount F301 and a second exposure amount C301 by referring to the luminance information stored in the luminance information storage unit 308 on the basis of the environment information acquired by the environment information acquisition unit 307. Specifically, the exposure amount determination unit 301 acquires the brightness of the light emitting portion of the object as the recognition target corresponding to the environment information acquired by the environment information acquisition unit 307, from the luminance information stored in the luminance information storage unit 308. Then, the first exposure amount F301 and the second exposure amount C301 are set on the basis of the acquired brightness of the light emitting portion. For example, the first exposure amount F301 is set such that a pixel value of the light emitting portion in the captured image is a predetermined reference value or more, and the second exposure amount C301 is set such that a pixel value of the light emitting portion in the captured image is a predetermined reference value or less. The reference values in these settings may be the same value or different values.

Similar to the image acquisition unit 102 in FIG. 1, the image acquisition unit 302 acquires, as the first exposure image and the second exposure image, two types of images respectively captured by the imaging device 20 with the first exposure amount F301 and the second exposure amount C301 that are determined by the exposure amount determination unit 301.

Similar to the light source detection unit 103 in FIG. 1, the light source detection unit 303 detects the light source region from the first exposure image, and outputs the detection result to the size specifying unit 304 and the recognition candidate extraction unit 305. Similar to the size specifying unit 104 in FIG. 1, the size specifying unit 304 specifies the size of the object to be recognized by the object recognition device 10B, from each piece of information of the center position, the width, and the height of the light source region indicated by the output of the light source detection unit 303, and outputs the size to the recognition candidate extraction unit 305.

Similar to the recognition candidate extraction unit 105 in FIG. 1, the recognition candidate extraction unit 305 extracts the recognition candidate from the second exposure image on the basis of the position of the light source region detected by the light source detection unit 303 and the size of the object specified by the size specifying unit 304. Similar to the recognition processing unit 106 in FIG. 1, the recognition processing unit 306 performs recognition processing on the recognition candidate extracted from the second exposure image by the recognition candidate extraction unit 305, and recognizes the type of the object and the display content in the object.

### (Operation Example)

Next, an operation example of the object recognition device 10B of the present embodiment described above will be described. Hereinafter, an example in which the traveling country of the host vehicle is Japan and the current time is 20 o'clock will be described.

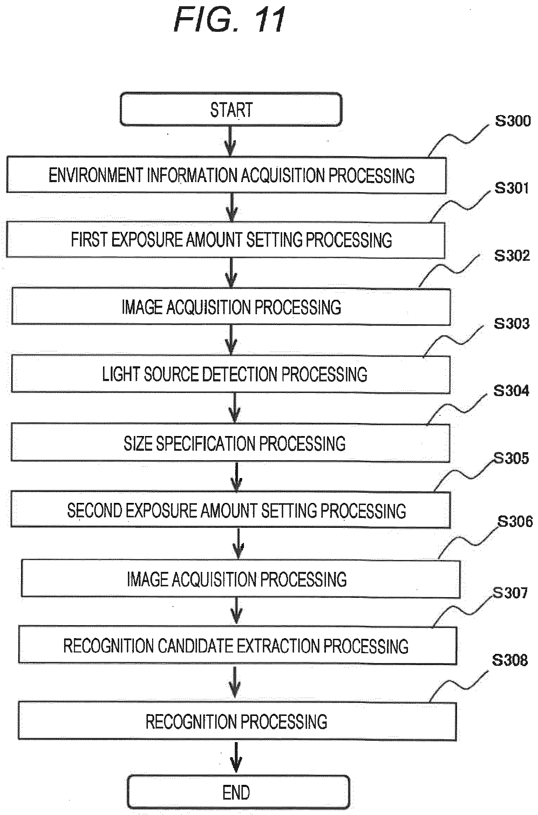

FIG. 11 is a flowchart illustrating a flow of processing of the object recognition device 10B according to the third embodiment of the present invention. The object recognition device 10B of the present embodiment is mounted on a vehicle, and performs the processing illustrated in the flowchart of FIG. 11 at predetermined processing cycles by, for example, an arithmetic device such as a CPU. Hereinafter, a specific operation example of the object recognition device 10B will be described with reference to the flowchart of FIG. 11.

According to the flowchart of FIG. 11, the object recognition device 10B sequentially performs environment information acquisition processing (S300), first exposure amount setting processing (S301), image acquisition processing (S302), light source detection processing (S303), size specification processing (S304), second exposure amount setting processing (S305), image acquisition processing (S306), recognition candidate extraction processing (S307), and recognition processing (S308), and thereby recognizes the type and display contents of the electric sign as the recognition target. Hereinafter, each processing content will be described.

In step S300, the environment information acquisition unit 307 acquires the environment information around the object recognition device 10B. Here, information on the current time and the traveling country of the host vehicle is acquired as the environment information around the object recognition device 10B.

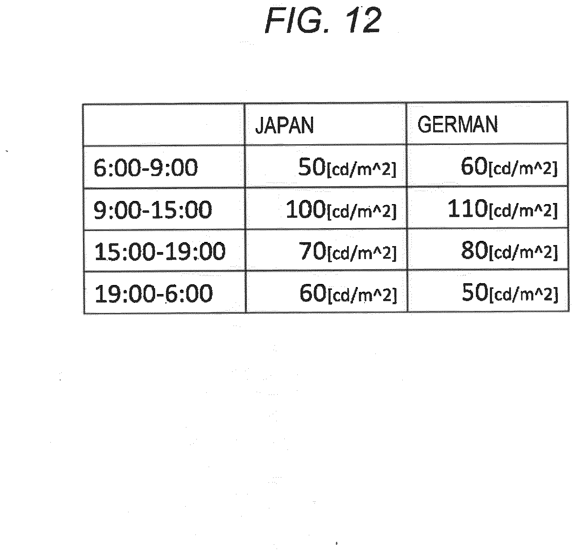

In step S301, the exposure amount determination unit 301 sets the first exposure amount F301 by referring to the luminance information stored in the luminance information storage unit 308 on the basis of the environment information acquired in step S300. Here, for example, by referring to the luminance information illustrated in the table of FIG. 12, the brightness of the light emitting portion of the electric sign which is the object to be recognized by the object recognition device 10B is specified, and the first exposure amount F301 corresponding to the brightness is set.

FIG. 12 is a diagram illustrating an example of the luminance information stored in the luminance information storage unit 308. In the luminance information in FIG. 12, the brightness of the light emitting portion of the electric sign is described in a table format for each time zone and traveling country. Specifically, each row in the table corresponds to a time zone, each column corresponds to a traveling country (Japan, Germany), and information on the brightness of the light emitting portion of the electric sign is stored for each combination thereof. For example, in a case where the traveling country is Japan, the brightness of the light emitting portion of the electric sign in the time zone from 6 o'clock to 9 o'clock is 50 [cd/m²], the brightness of the light emitting portion of the electric sign in the time zone from 9 o'clock to 15 o'clock is 100 [cd/m²], the brightness of the light emitting portion of the electric sign in the time zone from 15 o'clock to 19 o'clock is 70 [cd/m²], and the brightness of the light emitting portion of the electric sign in the time zone from 19 o'clock to 6 o'clock is 60 [cd/m²].

In the first exposure amount setting processing in step S301, by referring to the luminance information in FIG. 12, it can be seen that the brightness of the light emitting portion of the electric sign is 60 [cd/m²] at 20 o'clock, which is the current time, in Japan, which is the traveling country of the host vehicle. Therefore, the exposure amount with which pixel saturation occurs at the time of imaging can be set as the first exposure amount F301 on the basis of the brightness.

In steps S302 to S304, processing similar to the processing in steps S102 to S104 in FIG. 3 is performed by the image acquisition unit 302, the light source detection unit 303, and the size specifying unit 304, respectively.

In step S305, the exposure amount determination unit 301 sets the second exposure amount C301 by referring to the luminance information stored in the luminance information storage unit 308 on the basis of the environment information acquired in step S300. Here, similar to step S301, for example, by referring to the luminance information illustrated in the table of FIG. 12, the brightness of the light emitting portion of the electric sign which is the object to be recognized by the object recognition device 10B is specified, and the second exposure amount C301 corresponding to the brightness is set. Specifically, when referring to the luminance information in FIG. 12, as described above, it can be seen that the brightness of the light emitting portion of the electric sign is 60 [cd/m²] at 20 o'clock, which is the current time, in Japan, which is the traveling country of the host vehicle. Therefore, the exposure amount with which pixel saturation does not occur at the time of imaging can be set as the second exposure amount C301 on the basis of the brightness.

In steps S306 to S308, processing similar to the processing in steps S106 to S108 in FIG. 3 is performed by the image acquisition unit 302, the recognition candidate extraction unit 305, and the recognition processing unit 306, respectively.

As described above, the object recognition device 10B of the present embodiment adaptively changes the exposure amount at the time of imaging by acquiring the luminance information regarding the brightness of the light emitting portion corresponding to the current environment around the object recognition device 10B. As a result, it is possible to appropriately set the exposure amount at the time of imaging for an object of which the brightness is changed according to a location or a time zone, such as the light emitting portion of the electric sign, and it is possible to improve the detection accuracy and the recognition accuracy of the object.

According to the third embodiment of the present invention described above, in addition to the operational effects of (1) and (2) described in the first embodiment, the following operational effects of (4) and (5) are further achieved.

(4) The object recognition device 10B further includes the environment information acquisition unit 307 that acquires the environment information around the object recognition device 10B, and the luminance information storage unit 308 that stores the luminance information of the light emitting portion of the object for each environment. The exposure amount determination unit 301 determines the first exposure amount F301 and the second exposure amount C301 by referring to the luminance information stored in the luminance information storage unit 308 on the basis of the environment information acquired by the environment information acquisition unit 307. With this configuration, the exposure amount at the time of imaging can be set more appropriately, and thus it is possible to improve the detection accuracy and the recognition accuracy of the object.

(5) The environment information acquisition unit 307 can acquire information including at least one of a time zone and a location in which the object recognition device 10B is operating, as the environment information. With this configuration, information required for setting the exposure amount at the time of imaging can be reliably and easily acquired as the environment information.

### [Fourth Embodiment]

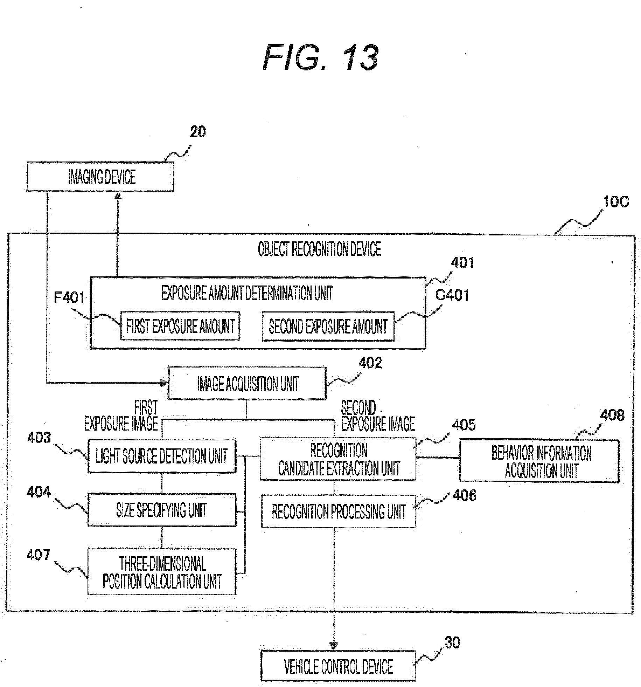

Next, a fourth embodiment of the present invention will be described. FIG. 13 is a functional block diagram illustrating a configuration of an object recognition device according to the fourth embodiment of the present invention. As illustrated in FIG. 13, an object recognition device 10C of the present embodiment is connected to the imaging device 20 and the vehicle control device 30, similar to the object recognition device 10 according to the first embodiment described with reference to FIG. 1. The object recognition device 10C of the present embodiment includes an exposure amount determination unit 401, an image acquisition unit 402, a light source detection unit 403, a size specifying unit 404, a recognition candidate extraction unit 405, a recognition processing unit 406, a three-dimensional position calculation unit 407, and a behavior information acquisition unit 408. The object recognition device 10C is configured using a computer having, for example, an arithmetic device such as a CPU and a storage device such as a ROM, a RAM, and a flash memory, and is operated as each functional block described above by executing a control program stored in the storage device by the arithmetic device. Note that some or all of the functions of the object recognition device 10C may be configured using hardware such as an FPGA.

Similar to the exposure amount determination unit 101 in FIG. 1, the exposure amount determination unit 401 calculates two types of exposure amounts for controlling the brightness of the imaging device 20, that is, a first exposure amount F401 and a second exposure amount C401, and outputs these calculated exposure amounts to the imaging device 20.

Similar to the image acquisition unit 102 in FIG. 1, the image acquisition unit 402 acquires, as the first exposure image and the second exposure image, two types of images respectively captured by the imaging device 20 with the first exposure amount F401 and the second exposure amount C401 that are determined by the exposure amount determination unit 401.

The light source detection unit 403 detects the light source region from the first exposure image, and outputs the detection result to the size specifying unit 404, the recognition candidate extraction unit 405, and the three-dimensional position calculation unit 407. The size specifying unit 404 specifies the size of the object to be recognized by the object recognition device 10C, from each piece of information of the center position, the width, and the height of the light source region indicated by the output of the light source detection unit 403, and outputs the size to the recognition candidate extraction unit 405 and the three-dimensional position calculation unit 407.

The three-dimensional position calculation unit 407 calculates the three-dimensional position of the object as the recognition target, from the output of the light source detection unit 403 and the size specifying unit 404, and outputs the calculated three-dimensional position to the recognition candidate extraction unit 405. The three-dimensional position calculation unit 407 has, for example, actual size information of an object in the real world and information regarding optical parameters of the imaging device 20. Here, the optical parameter is a parameter regarding a lens or an imaging element included in the imaging device 20, such as a focal length or an actual size of a pixel.

The three-dimensional position calculation unit 407 estimates a distance in a depth direction from the object recognition device 10C to the object using the size information of the object on the captured image output by the size specifying unit 404 and the actual size information and optical parameters of the object held by the three-dimensional position calculation unit 407. Then, the position of the object with respect to the object recognition device 10C is estimated for each of the horizontal direction and the vertical direction orthogonal to the depth direction, using the estimated distance in the depth direction, the center position of the light source region detected by the light source detection unit 403, and the optical parameters held by the three-dimensional position calculation unit 407. The three-dimensional position calculation unit 407 calculates the three-dimensional position of the object by estimating the position of the object based on the object recognition device 10C for each of the depth direction, the horizontal direction, and the vertical direction in this manner. The three-dimensional position of the object calculated by the three-dimensional position calculation unit 407 is output to the recognition candidate extraction unit 405.

The behavior information acquisition unit 408 acquires behavior information regarding the behavior of a moving body on which the object recognition device 10C is mounted. Specifically, for example, in a case where the moving body is a vehicle, information on a traveling speed, a steering angle, and a yaw rate, and the like of the vehicle can be acquired as the behavior information of the vehicle via a network such as a controller area network (CAN) provided in the vehicle. Note that the behavior information acquisition unit 408 may acquire other information as the behavior information. In addition, the behavior information may be acquired via a network other than the CAN, or the behavior information may be acquired by another method. As long as the information relates to the behavior of the moving body on which the object recognition device 10C is mounted, the behavior information acquisition unit 408 can use arbitrary information acquired by an arbitrary method as the behavior information.

The recognition candidate extraction unit 405 extracts a recognition candidate from the second exposure image on the basis of the output of each of the light source detection unit 403, the size specifying unit 404, the three-dimensional position calculation unit 407, and the behavior information acquisition unit 408. Specifically, first, the movement amount of the moving body in a period from when the imaging device 20 captures the first exposure image to when the imaging device 20 captures the second exposure image is calculated on the basis of the behavior information acquired by the behavior information acquisition unit 408. Next, the three-dimensional position of the object at the time of capturing the second exposure image is estimated by applying the calculated movement amount to the three-dimensional position of the object at the time of capturing the first exposure image, which is calculated by the three-dimensional position calculation unit 407. Finally, a recognition candidate is extracted by extracting, from the second exposure image, a region corresponding to the size of the object specified by the size specifying unit 204 at the estimated three-dimensional position. The recognition candidate extraction unit 405 can extract a recognition candidate corresponding to the three-dimensional position of the object, from the second exposure image in this manner, for example.

Similar to the recognition processing unit 106 in FIG. 1, the recognition processing unit 406 performs recognition processing on the recognition candidate extracted from the second exposure image by the recognition candidate extraction unit 405, and recognizes the type of the object and the display content in the object.

### (Operation Example)

Next, an operation example of the object recognition device 10C of the present embodiment described above will be described.

Hereinafter, similar to the operation example described in the first embodiment, an operation example in a case where an electric sign is a recognition target will be described.

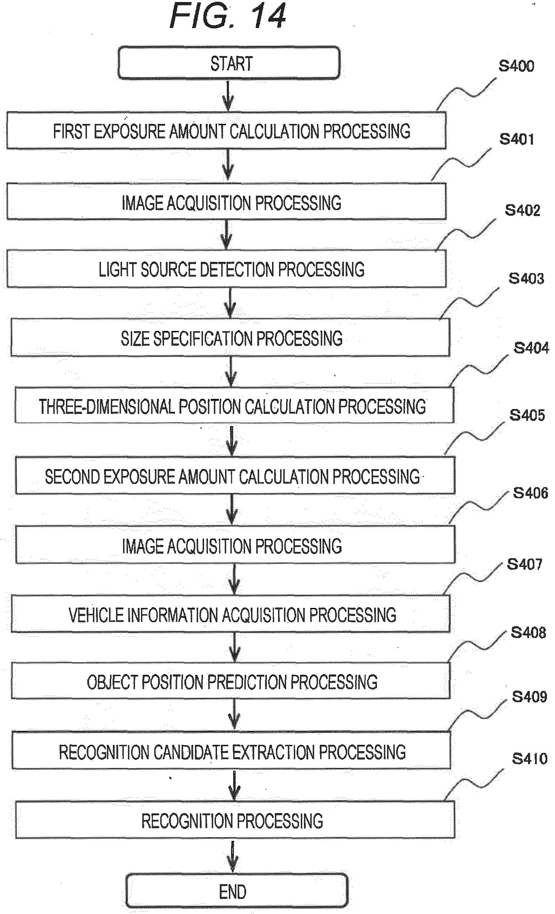

FIG. 14 is a flowchart illustrating a flow of processing of the object recognition device 10C according to the fourth embodiment of the present invention. The object recognition device 10C of the present embodiment is mounted on a vehicle, and performs the processing illustrated in the flowchart of FIG. 14 at predetermined processing cycles by, for example, an arithmetic device such as a CPU. Hereinafter, a specific operation example of the object recognition device 10C will be described with reference to the flowchart of FIG. 14.

According to the flowchart of FIG. 14, the object recognition device 10C sequentially performs first exposure amount calculation processing (S400), image acquisition processing (S401), light source detection processing (S402), size specification processing (S403), three-dimensional position calculation processing (S404), second exposure amount calculation processing (S405), image acquisition processing (S406), vehicle information acquisition processing (S407), object position prediction processing (S408), recognition candidate extraction processing (S409), and recognition processing (S410), and thereby recognizes the type and display contents of the electric sign as the recognition target. Hereinafter, each processing content will be described.

In steps S400 to S403, processing similar to the processing in steps S101 to S104 in FIG. 3 is performed by the exposure amount determination unit 401, the image acquisition unit 402, the light source detection unit 403, and the size specifying unit 404, respectively.

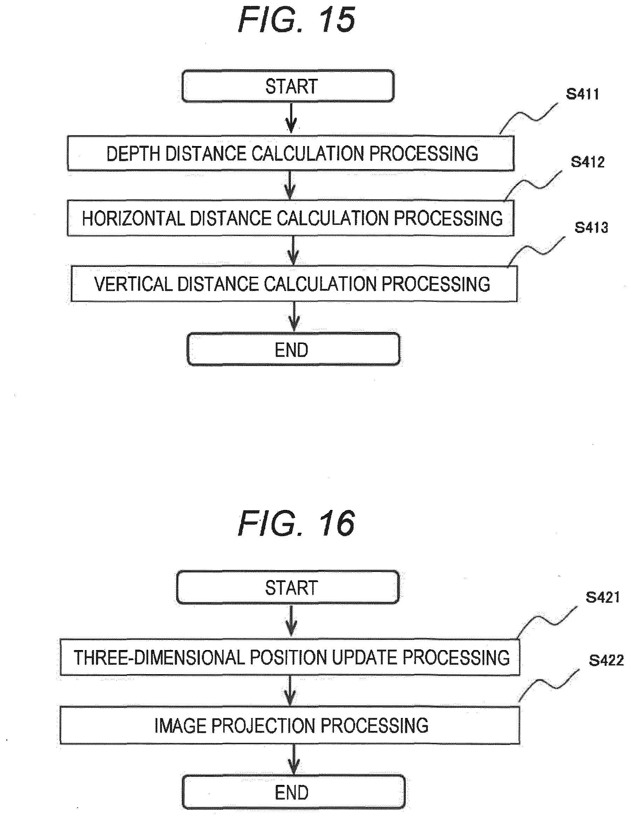

In step S404, the three-dimensional position calculation unit 407 calculates the three-dimensional position of the object on the basis of the position of the light source region detected in step S402 and the size of the object as the recognition target specified in step S403. Here, for example, the three-dimensional position of the object is calculated according to the processing flow illustrated in FIG. 15 described below.

FIG. 15 is a flowchart of the three-dimensional position calculation processing. In the three-dimensional position calculation processing, the three-dimensional position calculation unit 407 sequentially performs depth distance calculation processing (S411), horizontal distance calculation processing (S412), and vertical distance calculation processing (S413), and thereby acquires three-dimensional position information of the object.

In the depth distance calculation processing in step S411, a depth distance Z is obtained using the following Equation (1). $Z = f / w * R / O$ (1)

In Equation (1), f represents the focal length of the imaging device 20, w represents the size of the imaging element of the imaging device 20, R represents the actual size of the object as the recognition target, and O represents the size of the object on the captured image specified in step S403. Note that, as long as R and O are in the same direction, either the width direction or the height direction may be used. That is, the actual dimension width of the object as the recognition target and the width on the captured image may be used as R and O, respectively, or the actual dimension height of the object as the recognition target and the height on the captured image may be used as R and O, respectively.

Next, in the horizontal distance calculation processing in step S412, a horizontal distance X is obtained using the following Equation (2). $X = wx / f * Z * \left(cx-ox\right)$ (2)

In Equation (2), wx represents the horizontal width of the imaging element included in the imaging device 20, f represents the focal length of the imaging device 20, Z represents the depth distance of the object obtained by Equation (1) in the depth distance calculation processing in step S411, cx represents the position of the light source region in the horizontal direction on the captured image detected in step S402, and ox represents the central position of the captured image in the horizontal direction.

Next, in the vertical distance calculation processing in step S413, a vertical distance Y is obtained using the following Equation (3). $Y = wy / f * Z * \left(cy-oy\right)$ (3)

In Equation (3), wy represents the vertical width of the imaging element included in the imaging device 20, f represents the focal length of the imaging device 20, Z represents the depth distance of the object obtained by Equation (1) in the depth distance calculation processing in step S411, cy represents the position of the light source region in the vertical direction on the captured image detected in step S402, and oy represents the central position of the captured image in the vertical direction.

In the three-dimensional position calculation processing in step S404, the three-dimensional position of the object as the recognition target is acquired by the above calculation.

In steps S405 and S406, processing similar to the processing in steps S105 and S106 in FIG. 3 is performed by the exposure amount determination unit 401 and the image acquisition unit 402, respectively.

In step S407, the behavior information acquisition unit 408 acquires behavior information of the moving body. Here, for example, information on a traveling speed, a steering angle, a yaw rate, and the like of a vehicle that is a moving body is acquired as the behavior information.

In step S408, the recognition candidate extraction unit 405 predicts the position of the object in the second exposure image on the basis of the three-dimensional position of the object calculated in step S404 and the behavior information acquired in step S407. Here, for example, the position of the object is predicted according to the processing flow illustrated in FIG. 16 described below.

FIG. 16 is a flowchart of the object position prediction processing. In the object position prediction processing, the recognition candidate extraction unit 405 sequentially performs three-dimensional position update processing (S421) and image projection processing (S422), and thereby predicts the position of the object.

In the three-dimensional position update processing in step S421, the three-dimensional position of the object calculated in step S404 is updated to the three-dimensional position at the time of capturing the second exposure image, by using the behavior information acquired in step S407. That is, since the three-dimensional position of the object calculated in step S407 is the position of the object at the time of capturing the first exposure image, the three-dimensional position of the object is updated on the basis of the movement amount of the moving body in the period from when the imaging device 20 captures the first exposure image to when the imaging device 20 captures the second exposure image. Specifically, the movement amount of the vehicle as the moving body is calculated for each of the depth direction, the horizontal direction, and the vertical direction using the information on the speed, the steering angle, the yaw rate, and the like included in the behavior information. Thereafter, the three-dimensional position is updated to the three-dimensional position at the time of capturing the second exposure image by subtracting the movement amount of the vehicle from the three-dimensional position calculated in step S407.

In the image projection processing in step S422, the position of the object in the second exposure image is predicted by projecting the three-dimensional position of the object updated in step S421 on the second exposure image.

In the object position prediction processing in step S408, the position of the object in the second exposure image is predicted by the above processing.

In step S409, the recognition candidate extraction unit 405 extracts a recognition candidate for performing the recognition processing, from the second exposure image on the basis of the position of the object predicted in step S408. Here, a region to be extracted as the recognition candidate in the second exposure image is determined by applying the size (height, width) of the object specified in step S403 to the position of the object on the second exposure image obtained in step S422. At this time, the width and height of the region to be extracted as the recognition candidate may be determined in consideration of the movement amount of the vehicle calculated in step S421 and the actual size of the object.

In step S410, the recognition processing unit 406 performs recognition processing similar to that in step S107 in FIG. 3 on the recognition candidate extracted in step S409.

As described above, in the object recognition device 10C of the present embodiment, the region to be extracted as the recognition candidate from the second exposure image is determined in consideration of the movement amount of the moving body in the period from when the imaging device 20 captures the first exposure image to when the imaging device 20 captures the second exposure image. As a result, even in a case where the object recognition device 10C is installed in the moving body, it is possible to extract the recognition candidate with high accuracy, and it is possible to improve the recognition performance.

According to the fourth embodiment of the present invention described above, in addition to the operational effects of (1) and (2) described in the first embodiment, the following operational effects of (6) are further achieved.

(6) The object recognition device 10C further includes the three-dimensional position calculation unit 407 that calculates the three-dimensional position of the object, and the behavior information acquisition unit 408 that acquires the behavior information regarding the behavior of the moving body on which the object recognition device 10C is mounted. The recognition candidate extraction unit 405 extracts the recognition candidate on the basis of the position of the light source region, the size of the object, the three-dimensional position of the object, and the behavior information. With this configuration, the recognition candidate can be determined in consideration of the movement amount of the moving body, and thus it is possible to improve the recognition performance for the object.

### [Fifth Embodiment]

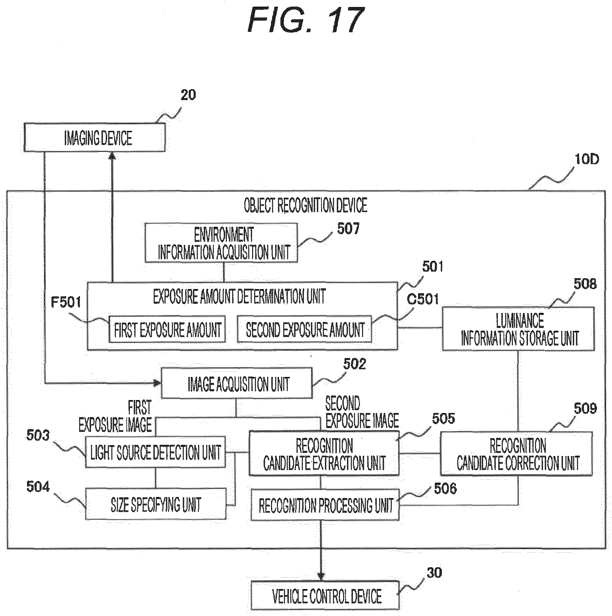

Next, a fifth embodiment of the present invention will be described. FIG. 17 is a functional block diagram illustrating a configuration of an object recognition device according to the fifth embodiment of the present invention. As illustrated in FIG. 17, an object recognition device 10D of the present embodiment is connected to the imaging device 20 and the vehicle control device 30, similar to the object recognition device 10 according to the first embodiment described with reference to FIG. 1. The object recognition device 10D of the present embodiment includes an exposure amount determination unit 501, an image acquisition unit 502, a light source detection unit 503, a size specifying unit 504, a recognition candidate extraction unit 505, a recognition processing unit 506, an environment information acquisition unit 507, a luminance information storage unit 508, and a recognition candidate correction unit 509. The object recognition device 10D is configured using a computer having, for example, an arithmetic device such as a CPU and a storage device such as a ROM, a RAM, and a flash memory, and is operated as each functional block described above by executing a control program stored in the storage device by the arithmetic device. Note that some or all of the functions of the object recognition device 10D may be configured using hardware such as an FPGA.

Similar to the environment information acquisition unit 307 in FIG. 10 described in the third embodiment, the environment information acquisition unit 507 acquires environment information around the object recognition device 10D, and outputs the environment information to the exposure amount determination unit 501. Similar to the luminance information storage unit 308 in FIG. 10 described in the third embodiment, the luminance information storage unit 508 stores luminance information regarding the brightness of the light emitting portion of the object as the recognition target.

Similar to the exposure amount determination unit 301 in FIG. 10 described in the third embodiment, the exposure amount determination unit 501 determines a first exposure amount F501 and a second exposure amount C501 by referring to the luminance information stored in the luminance information storage unit 508 on the basis of the environment information acquired by the environment information acquisition unit 507.

Similar to the image acquisition unit 102 in FIG. 1, the image acquisition unit 502 acquires, as the first exposure image and the second exposure image, two types of images respectively captured by the imaging device 20 with the first exposure amount F501 and the second exposure amount C501 that are determined by the exposure amount determination unit 501.

Similar to the light source detection unit 103 in FIG. 1, the light source detection unit 503 detects the light source region from the first exposure image, and outputs the detection result to the size specifying unit 504 and the recognition candidate extraction unit 505. Similar to the size specifying unit 104 in FIG. 1, the size specifying unit 504 specifies the size of the object to be recognized by the object recognition device 10D, from each piece of information of the center position, the width, and the height of the light source region indicated by the output of the light source detection unit 503, and outputs the size to the recognition candidate extraction unit 505.

Similar to the recognition candidate extraction unit 105 in FIG. 1, the recognition candidate extraction unit 505 extracts the recognition candidate from the second exposure image on the basis of the position of the light source region detected by the light source detection unit 503 and the size of the object specified by the size specifying unit 504.

The recognition candidate correction unit 509 corrects at least one of the position, size, and shape of the recognition candidate extracted by the recognition candidate extraction unit 505, on the second exposure image, extracts the recognition candidate after the correction, and outputs the recognition candidate after the correction to the recognition processing unit 506. For example, the recognition candidate correction unit 509 can correct the position, size, and shape of the recognition candidate by once enlarging the region output as the recognition candidate by the recognition candidate extraction unit 505 in the second exposure image and reducing the region on the basis of the luminance information of the enlarged region. Specifically, for example, the brightness of the light emitting portion of the object in the second exposure image is estimated on the basis of the luminance information stored in the luminance information storage unit 508, and each pixel having a luminance value similar to the estimated brightness of the light emitting portion, that is, each pixel of which a luminance difference with the light emitting portion is less than a predetermined threshold is extracted from the enlarged region of the recognition candidate. Then, the region of the recognition candidate is reduced such that, for example, the pixel density in the region is equal to or greater than a predetermined value on the basis of the distribution of the extracted pixels. The correction of the recognition candidate can be performed by setting the position, size, and shape of the recognition candidate of which the region has been reduced on the second exposure image as the position, size, and shape of the recognition candidate after the correction.

Alternatively, the correction of the recognition candidate may be performed by binarizing the luminance information of the enlarged region. For example, the luminance information can be binarized by setting the luminance value of the pixel of which the difference with the brightness of the light emitting portion is less than the predetermined threshold as 255 and setting the luminance value of the pixel of which the difference with the brightness of the light emitting portion is equal to or greater than the threshold as 0. After such binarization of the luminance information, the projection histograms are calculated in the vertical direction and the horizontal direction, the peak of each histogram is detected, and thereby the position, size, and shape of the recognition candidate after the correction can be determined. Furthermore, as the statistical machine learning, a model capable of estimating a regression coefficient with respect to the position of the object may be learned for each brightness of the light emitting portion, and the position, size, and shape of the recognition candidate after the correction may be determined by switching the model to be used according to the brightness of the light emitting portion of the object in the second exposure image estimated from the luminance information. In addition to this, it is possible to correct the recognition candidate on the second exposure image using an arbitrary method.

The recognition processing unit 506 performs recognition processing similar to that of the recognition processing unit 106 in FIG. 1 on the recognition candidate corrected on the second exposure image by the recognition candidate correction unit 509, and thereby recognizes the type of the object and the display content of the object.

### (Operation Example)

Next, an operation example of the object recognition device 10D of the present embodiment described above will be described. Hereinafter, similar to the operation example described in the first embodiment, an operation example in a case where an electric sign is a recognition target will be described.

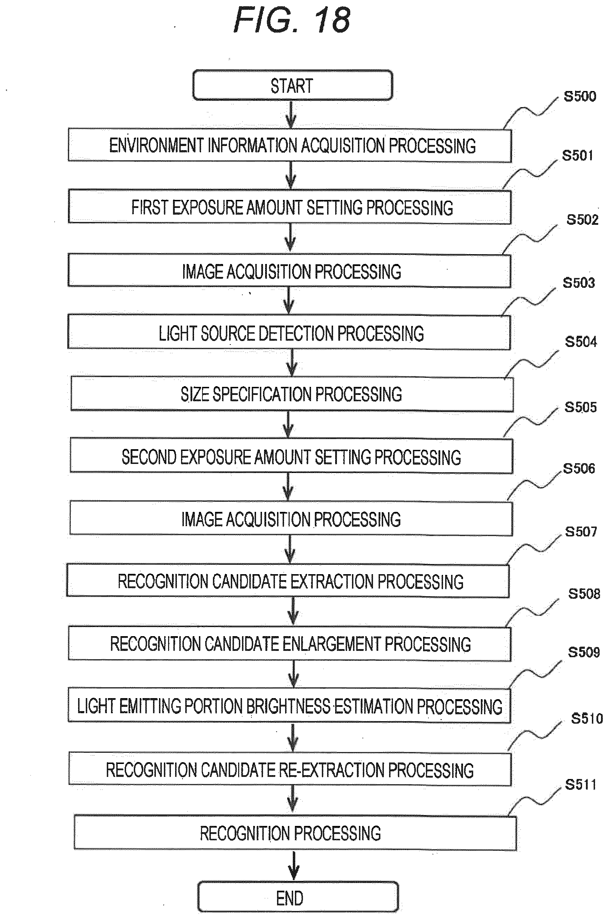

FIG. 18 is a flowchart illustrating a flow of processing of the object recognition device 10D according to the fifth embodiment of the present invention. The object recognition device 10D of the present embodiment is mounted on a vehicle, and performs the processing illustrated in the flowchart of FIG. 18 at predetermined processing cycles by, for example, an arithmetic device such as a CPU. Hereinafter, a specific operation example of the object recognition device 10D will be described with reference to the flowchart of FIG. 18.

According to the flowchart of FIG. 18, the object recognition device 10D sequentially performs environment information acquisition processing (S500), first exposure amount setting processing (S501), image acquisition processing (S502), light source detection processing (S503), size specification processing (S504), second exposure amount setting processing (S505), image acquisition processing (S506), recognition candidate extraction processing (S507), recognition candidate enlargement processing (S508), light emitting portion brightness estimation processing (S509), recognition candidate re-extraction processing (S510), and recognition processing (S511), and thereby recognizes the type and display contents of the electric sign as the recognition target. Hereinafter, each processing content will be described.

In step S500, the environment information acquisition unit 507 acquires the environment information around the object recognition device 10D, similar to step S300 in FIG. 11.

In step S501, the exposure amount determination unit 501 sets the first exposure amount F501 by referring to the luminance information stored in the luminance information storage unit 508 on the basis of the environment information acquired in step S500, similar to step S301 in FIG. 11.

In steps S502 to S504, processing similar to the processing in steps S102 to S104 in FIG. 3 is performed by the image acquisition unit 502, the light source detection unit 503, and the size specifying unit 504, respectively.

In step S505, the exposure amount determination unit 501 sets the second exposure amount C501 by referring to the luminance information stored in the luminance information storage unit 508 on the basis of the environment information acquired in step S500, similar to step S305 in FIG. 11.

In steps S506 and S507, processing similar to the processing in steps S106 and S107 in FIG. 3 is performed by the image acquisition unit 502 and the recognition candidate extraction unit 505, respectively.

In step S508, the recognition candidate correction unit 509 enlarges the recognition candidate extracted in step S507 on the second exposure image. Here, for example, the recognition candidate is enlarged by multiplying the region of the second exposure image extracted as the recognition candidate by predetermined magnifications in the width direction and the height direction. The magnifications to be multiplied in the width direction and the height direction may be the same value or different values.

In step S509, the recognition candidate correction unit 509 estimates the brightness of the light emitting portion of the object in the second exposure image by referring to the luminance information stored in the luminance information storage unit 508. Here, the brightness of the light emitting portion in the second exposure image can be estimated by calculating the luminance value of the second exposure image corresponding to the brightness of the light emitting portion indicated by the luminance information on the basis of the second exposure amount C501 set in step S505.

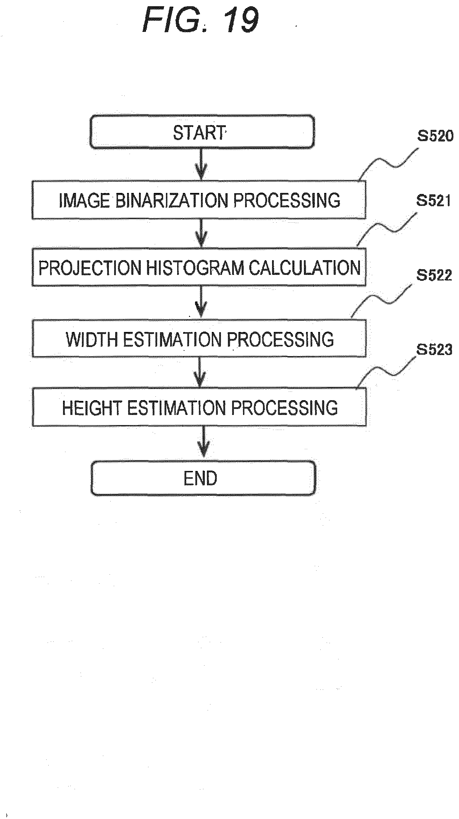

In step S510, the recognition candidate correction unit 509 resets the recognition candidate by reducing the recognition candidate enlarged in step S508, on the basis of the brightness of the light emitting portion in the second exposure image estimated in step S509. Then, the reset recognition candidate is re-extracted as a recognition candidate after the correction. Here, for example, the recognition candidate is re-extracted according to the processing flow illustrated in FIG. 19 described below.

FIG. 19 is a flowchart of the recognition candidate re-extraction processing. In the recognition candidate re-extraction processing, the recognition candidate correction unit 509 sequentially performs image binarization processing (S520), projection histogram calculation (S521), width estimation processing (S522), and height estimation processing (S523), and thereby re-extracts the recognition candidate.

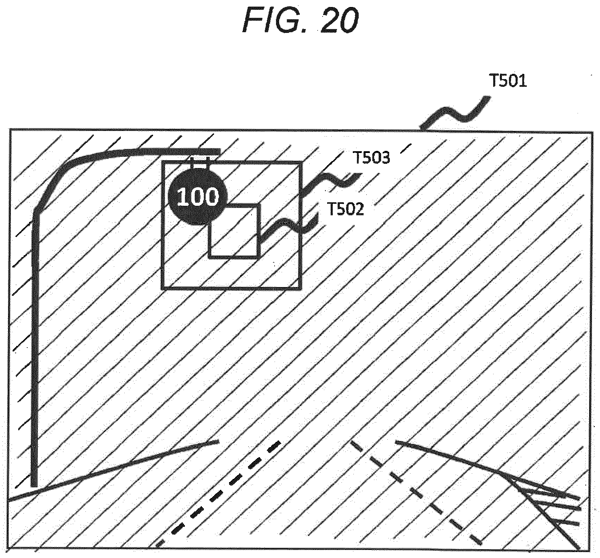

Note that, in the following description, it is assumed that a second exposure image T501 illustrated in FIG. 20 is acquired in step S506, and from the second exposure image T501, an image region T502 is extracted as the recognition candidate in step S507, and an image region T503 is obtained as a recognition candidate after enlargement in step S508.

In the image binarization processing in step S520, the luminance value of each pixel in the image region T503 in FIG. 20 is binarized on the basis of the brightness of the light emitting portion estimated in step S509. Specifically, for example, as described above, the luminance value of the pixel of which the difference with the brightness of the light emitting portion is less than the predetermined threshold is set as 255, and the luminance value of the pixel of which the difference with the brightness of the light emitting portion is equal to or greater than the threshold is set as 0.

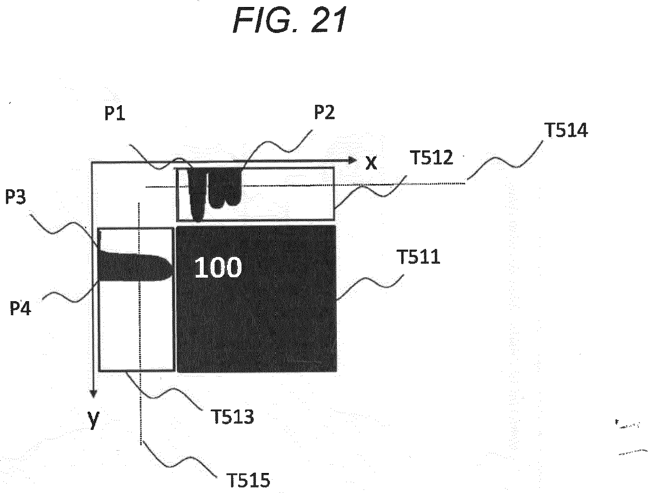

FIG. 21 is a diagram illustrating an example of a recognition candidate after the binarization processing and a projection histogram. In FIG. 21, a binarized image T511 illustrates a result of performing the binarization processing on each pixel of the image region T503 that is the recognition candidate after enlargement illustrated in FIG. 20. In the binarized image T511, each pixel of which the luminance value is set as 255 by the binarization processing is indicated in white, and each pixel of which the luminance value is set as 0 is indicated in black. Each pixel indicated in white corresponds to the light emitting portion of the electric sign which is the object as the recognition target, and each pixel indicated in black corresponds to the other portion.

In the projection histogram calculation in step S521, the projection histogram for the column direction and the row direction of the binarized image T511 obtained by the image binarization processing in step S520 is calculated. Here, the projection histogram is calculated by adding the number of pixels having a luminance value of 255 in the binarized image T511 in the column direction and the row direction.

In FIG. 21, a histogram T512 is an example of the projection histogram calculated for the binarized image T511 in the column direction, and a histogram T513 is an example of the projection histogram calculated for the binarized image T511 in the row direction. As indicated by these histograms T512 and T513, by performing the projection histogram calculation on the binarized image T511, it is possible to obtain a histogram having a peak at a position corresponding to the light emitting portion in each of the horizontal direction and the vertical direction.

In the width estimation processing in step S522, the width of the recognition candidate after the correction is estimated on the basis of the histogram obtained by the projection histogram calculation in step S521. Here, the width of the recognition candidate after the correction is estimated using the histogram T512 calculated for the binarized image T511 in the column direction, that is, the histogram T512 indicating the peak position in the horizontal direction. Specifically, for example, as illustrated in FIG. 21, a rising point and a falling point located at both ends of the peak portion having a value equal to or larger than a threshold T514 in the histogram T512 are acquired as a minimum point P1 and a maximum point P2, respectively. Then, the number of columns between the acquired points P1 and P2 is estimated as the width of the recognition candidate after correction.

In the height estimation processing in step S523, the height of the recognition candidate after the correction is estimated on the basis of the histogram obtained by the projection histogram calculation in step S521. Here, the height of the recognition candidate after the correction is estimated using the histogram T513 calculated for the binarized image T511 in the row direction, that is, the histogram T513 indicating the peak position in the vertical direction. Specifically, for example, as illustrated in FIG. 21, a rising point and a falling point located at both ends of the peak portion having a value equal to or larger than a threshold T515 in the histogram T513 are acquired as a minimum point P3 and a maximum point P4, respectively. Then, the number of rows between the acquired points P3 and P4 is estimated as the height of the recognition candidate after correction.

In the recognition candidate re-extraction processing in step S510, the width and height of the recognition candidate after correction are estimated by the above processing. Then, the recognition candidate is re-extracted by re-setting the recognition candidate on the second exposure image with the estimated width and height.

In step S511, the recognition processing unit 506 performs recognition processing similar to that in step S107 in FIG. 3 on the recognition candidate re-extracted in step S510.

As described above, the object recognition device 10D of the present embodiment corrects the recognition candidate temporarily extracted from the second exposure image by performing the image processing, in which the brightness of the light emitting portion is taken into consideration, on the second exposure image. As a result, even in a case where it is difficult for the recognition candidate extraction unit 505 to extract an appropriate recognition candidate from the second exposure image, it is possible to maintain a high recognition accuracy.

According to the fifth embodiment of the present invention described above, in addition to the operational effects of (1) and (2) described in the first embodiment, the following operational effects of (7) and (8) are further achieved.

(7) The object recognition device 10D further includes the recognition candidate correction unit 509 that corrects at least one of the position, size, and shape of the recognition candidate extracted by the recognition candidate extraction unit 505. The recognition processing unit 506 performs the recognition processing on the recognition candidate corrected by the recognition candidate correction unit 509. With this configuration, the recognition candidate temporarily extracted from the second exposure image can be corrected, and thus it is possible to maintain the recognition accuracy of the object with a high accuracy.

(8) The recognition candidate correction unit 509 corrects the recognition candidate by enlarging the recognition candidate extracted by the recognition candidate extraction unit 505 and reducing the recognition candidate on the basis of the information on the luminance value of the enlarged recognition candidate. Specifically, the recognition candidate correction unit 509 estimates the brightness of the light emitting portion of the object in the second exposure image, and reduces the recognition candidate on the basis of the distribution of pixels having a luminance value similar to the brightness of the light emitting portion in the enlarged recognition candidate. With this configuration, it is possible to appropriately correct the recognition candidate in consideration of the brightness of the light emitting portion of the object in the second exposure image.

Note that, in each of the first to fifth embodiments described above, an example in which the electric sign is set as the object as the recognition target has been described, but another object may be set as the recognition target. For example, the present invention can be applied as long as an object having a high-luminance light emitting portion, such as a preceding vehicle having a light emitting portion such as a brake lamp, a following vehicle having a light emitting portion such as a headlight, a traffic light, a signboard indicating a destination, and various electric bulletin boards is set as the recognition target.

The embodiments and various changes described above are merely examples, and the present invention is not limited to these contents as long as the characteristics of the invention are not impaired. The present invention is not limited to the above-described embodiments and modifications, and various changes can be made without departing from the gist of the present invention. Various changes that can be understood by those skilled in the art within the scope of the present invention can be made to the configuration and details of the present invention.

### Reference Signs List

10, 10A, 10B, 10C, 10D object recognition device
20 imaging device
30 vehicle control device
101, 201, 301, 401, 501 exposure amount determination unit
102, 202, 302, 402, 502 image acquisition unit
103, 203, 303, 403, 503 light source detection unit
104, 204, 304, 404, 504 size specifying unit
105, 205, 305, 405, 505 recognition candidate extraction unit
106, 206, 306, 406, 506 recognition processing unit
207 size information storage unit
307, 507 environment information acquisition unit
308, 508 luminance information storage unit
407 three-dimensional position calculation unit
408 behavior information acquisition unit
509 recognition candidate correction unit

## Claims

1. An object recognition device (10) comprising:
an exposure amount determination unit (101) that determines a first exposure amount (F101), and a second exposure amount (C101) smaller than the first exposure amount (F101) ;
an image acquisition unit (102) that acquires a first exposure image (T111) captured with the first exposure amount (F101), and a second exposure image (T121) captured with the second exposure amount (C101), wherein the image acquisition unit (102) acquires the first and second exposure images from an imaging device mounted to a vehicle which captures an image of a landscape around the vehicle and outputs the captured image to the object recognition device (10) at a predetermined frame rate;
a light source detection unit (103) that detects a light source region corresponding to a light emitting portion of an object as a recognition target which includes the light emitting portion from the first exposure image (T111);
a size specifying unit (104) that specifies a size of the object on the basis of the light source region detected by the light source detection unit (103);
a recognition candidate extraction unit (105) that extracts a recognition candidate that is a candidate for the region where the object is present from the second exposure image (T121) on the basis of a position of the light source region detected by the light source detection unit (103) and the size of the object specified by the size specifying unit (104); and
a recognition processing unit (106) that performs recognition processing regarding the object on the recognition candidate extracted by the recognition candidate extraction unit (105),
wherein the exposure amount determination unit (10) determines the first exposure amount and the second exposure amount on the basis of an exposure amount with which at least a part of a light emitting portion of the object is pixel saturated in the first exposure image at a time of imaging.

2. The object recognition device (10) according to claim 1, further comprising:
an environment information acquisition unit (307) that acquires environment information around the object recognition device (10); and
a luminance information storage unit (308) that stores luminance information of a light emitting portion of the object for each environment,
wherein the exposure amount determination unit (101) determines the first exposure amount and the second exposure amount by referring to the luminance information stored in the luminance information storage unit (308) on the basis of the environment information acquired by the environment information acquisition unit (307).

3. The object recognition device (10) according to claim 2,
wherein the environment information acquisition unit (307) acquires information including at least one of a time zone and a location in which the object recognition device (10) is operating, as the environment information.

4. The object recognition device (10) according to claim 1, further comprising:
a three-dimensional position calculation unit (407) that calculates a three-dimensional position of the object; and
a behavior information acquisition unit (408) that acquires behavior information regarding a behavior of a moving body on which the object recognition device (10) is mounted,
wherein the recognition candidate extraction unit (105) extracts the recognition candidate on the basis of a position of the light source region, a size of the object, the three-dimensional position of the object, and the behavior information.

5. The object recognition device (10) according to claim 1, further comprising:
a recognition candidate correction unit (509) that corrects at least one of a position, a size, and a shape of the recognition candidate extracted by the recognition candidate extraction unit (105),
wherein the recognition processing unit (106) performs the recognition processing on the recognition candidate corrected by the recognition candidate correction unit (509).

6. The object recognition device (10) according to claim 5,
wherein the recognition candidate correction unit (509) corrects the recognition candidate by enlarging the recognition candidate extracted by the recognition candidate extraction unit (105) and reducing the recognition candidate on the basis of information on a luminance value of the enlarged recognition candidate,
wherein the recognition candidate correction unit (509) estimates a brightness of a light emitting portion of the object in the second exposure image, and reduces the recognition candidate on the basis of a distribution of pixels having a luminance value similar to the brightness of the light emitting portion in the enlarged recognition candidate.

7. The object recognition device (10) according to claim 1, further comprising:
a size information storage unit (207) in which size information indicating a relationship between a light emitting portion of the object and a size of the object is stored for each type of the object,
wherein the size specifying unit (104) specifies a size of the object by referring to the size information stored in the size information storage unit (207) on the basis of a size of the light source region detected by the light source detection unit.

## Patentansprüche

1. Objekterkennungsvorrichtung (10), die umfasst:
eine Belichtungsmengen-Bestimmungseinheit (101), die eine erste Belichtungsmenge (F101) und eine zweite Belichtungsmenge (C101), die kleiner als die erste Belichtungsmenge (F101) ist, bestimmt;
eine Bilderfassungseinheit (102), die ein Bild (T111) mit einer ersten Belichtung, das mit der ersten Belichtungsmenge (F101) aufgenommen wird, und ein Bild (T121) mit einer zweiten Belichtung, das mit der zweiten Belichtungsmenge (C101) aufgenommen wird, erfasst, wobei die Bilderfassungseinheit (101) die Bilder mit einer ersten und mit einer zweiten Belichtung von einer an einem Fahrzeug angebrachten Bilderzeugungsvorrichtung, die ein Bild einer Landschaft um das Fahrzeug aufnimmt und das aufgenommene Bild an die Objekterkennungsvorrichtung (10) ausgibt, mit einer vorgegebenen Bildfrequenz erfasst,
eine Lichtquellen-Detektionseinheit (103), die ein Lichtquellengebiet detektiert, das einem lichtemittierenden Abschnitt eines Objekts als ein Erkennungsziel, das den lichtemittierenden Abschnitt aus dem Bild (T111) mit einer ersten Belichtung enthält, entspricht;
eine Größenspezifizierungseinheit (104), die auf der Grundlage des durch die Lichtquellen-Detektionseinheit (103) detektierten Lichtquellengebiets eine Größe des Objekts spezifiziert;
eine Erkennungskandidaten-Extraktionseinheit (105), die auf der Grundlage einer Position des durch die Lichtquellen-Detektionseinheit (103) detektierten Lichtquellengebiets und der durch die Größenspezifizierungseinheit (104) spezifizierten Größe des Objekts einen Erkennungskandidaten, der ein Kandidat für das Gebiet, wo das Objekt aus dem Bild (T121) mit einer zweiten Belichtung vorhanden ist, extrahiert; und
eine Erkennungsverarbeitungseinheit (106), die an dem durch die Erkennungskandidaten-Extraktionseinheit (105) extrahierten Erkennungskandidaten eine Erkennungsverarbeitung hinsichtlich des Objekts ausführt,
wobei die Belichtungsmengen-Bestimmungseinheit (10) auf der Grundlage einer Belichtungsmenge, mit der wenigstens ein Teil eines lichtemittierenden Abschnitts des Objekts in dem ersten Belichtungsbild zum Zeitpunkt der Bilderzeugung Pixel-gesättigt ist, die erste Belichtungsmenge und die zweite Belichtungsmenge bestimmt.

2. Objekterkennungsvorrichtung (10) nach Anspruch 1, die ferner umfasst:
eine Umgebungsinformations-Erfassungseinheit (307), die Umgebungsinformationen um die Objekterkennungsvorrichtung (10) erfasst; und
eine Leuchtdichteinformations-Speichereinheit (308), die für jede Umgebung Leuchtdichteinformationen eines lichtemittierenden Abschnitts des Objekts speichert,
wobei die Belichtungsmengen-Bestimmungseinheit (101) die erste Belichtungsmenge und die zweite Belichtungsmenge durch Bezugnahme auf die in der Leuchtdichteinformations-Speichereinheit (308) gespeicherten Leuchtdichteinformationen auf der Grundlage der durch die Umgebungsinformations-Erfassungseinheit (307) erfassten Umgebungsinformationen bestimmt.

3. Objekterkennungsvorrichtung (10) nach Anspruch 2,
wobei die Umgebungsinformations-Erfassungseinheit (307) Informationen, die wenigstens eines einer Zeitzone und eines Orts, in dem die Objekterkennungsvorrichtung (10) arbeitet, als die Umgebungsinformationen enthalten, erfasst.

4. Objekterkennungsvorrichtung (10) nach Anspruch 1, die ferner umfasst:
eine Einheit (407) zum Berechnen der dreidimensionalen Position, die eine dreidimensionale Position des Objekts berechnet; und
eine Verhaltensinformations-Erfassungseinheit (408), die Verhaltensinformationen hinsichtlich eines Verhaltens eines bewegten Körpers, an dem die Objekterkennungsvorrichtung (10) angebracht ist, erfasst,
wobei die Erkennungskandidaten-Extraktionseinheit (105) den Erkennungskandidaten auf der Grundlage einer Position des Lichtquellengebiets, einer Größe des Objekts, der dreidimensionalen Position des Objekts und der Verhaltensinformationen extrahiert.

5. Objekterkennungsvorrichtung (10) nach Anspruch 1, die ferner umfasst:
eine Erkennungskandidaten-Korrektureinheit (509), die wenigstens eines einer Position, einer Größe und einer Form des durch die Erkenntniskandidaten-Extraktionseinheit (105) extrahierten Erkennungskandidaten korrigiert,
wobei die Erkennungsverarbeitungseinheit (106) an dem durch die Erkennungskandidaten-Korrektureinheit (509) korrigierten Erkennungskandidaten die Erkennungsverarbeitung ausführt.

6. Objekterkennungsvorrichtung (10) nach Anspruch 5,
wobei die Erkennungskandidaten-Korrektureinheit (509) den Erkennungskandidaten durch Vergrößern des durch die Erkennungskandidaten-Extraktionseinheit (105) extrahierten Erkennungskandidaten und Verkleinern des Erkennungskandidaten auf der Grundlage von Informationen über einen Leuchtdichtewert des vergrößerten Erkennungskandidaten korrigiert,
wobei die Erkennungskandidaten-Korrektureinheit (509) eine Helligkeit eines lichtemittierenden Abschnitts des Objekts in dem zweiten Belichtungsbild schätzt und den Erkennungskandidaten auf der Grundlage einer Verteilung von Pixeln mit einem Leuchtdichtewert ähnlich der Helligkeit des lichtemittierenden Abschnitts in dem vergrößerten Erkennungskandidaten verkleinert.

7. Objekterkennungsvorrichtung (10) nach Anspruch 1, die ferner umfasst:
eine Größeninformations-Speichereinheit (207), in der für jeden Typ des Objekts Größeninformationen, die eine Beziehung zwischen einem lichtemittierenden Abschnitt des Objekts und einer Größe des Objekts angeben, gespeichert sind,
wobei die Größenspezifizierungseinheit (104) eine Größe des Objekts durch Bezugnahme auf die in der Größeninformations-Speichereinheit (207) gespeicherten Größeninformationen auf der Grundlage einer Größe des durch die Lichtquellen-Detektionseinheit detektierten Lichtquellengebiets spezifiziert.

## Revendications

1. Dispositif de reconnaissance d'objet (10) comprenant :
une unité de détermination de quantité d'exposition (101) qui détermine une première quantité d'exposition (F101), et une deuxième quantité d'exposition (C101) inférieure à la première quantité d'exposition (F101) ;
une unité d'acquisition d'image (102) qui acquiert une première image d'exposition (T111) capturée avec la première quantité d'exposition (F101), et une deuxième image d'exposition (T121) capturée avec la deuxième quantité d'exposition (C101), l'unité d'acquisition d'image (102) acquérant la première et la deuxième image d'exposition à partir d'un dispositif d'imagerie monté sur un véhicule qui capture une image d'un paysage autour du véhicule et qui sort l'image capturée vers le dispositif de reconnaissance d'image (10) à fréquence d'images prédéterminée ;
une unité de détection de source de lumière (103) qui détecte une région de source de lumière correspondant à une portion d'émission de lumière d'un objet en tant que cible de reconnaissance qui inclut la portion d'émission de lumière à partir de la première image d'exposition (T111) ;
une unité de spécification de taille (104) qui spécifie une taille de l'objet sur la base de la région de source de lumière détectée par l'unité de détection de source de lumière (103) ;
une unité d'extraction de candidat de reconnaissance (105) qui extrait un candidat de reconnaissance qui est un candidat pour la région où l'objet est présent à partir de la deuxième image d'exposition (T121) sur la base d'une position de la région de source de lumière détectée par l'unité de détection de source de lumière (103) et de la taille de l'objet spécifiée par l'unité de spécification de taille (104) ; et
une unité de traitement de reconnaissance (106) qui effectue un traitement de reconnaissance concernant l'objet sur le candidat de reconnaissance extrait par l'unité d'extraction de candidat de reconnaissance (105),
dans lequel l'unité de détermination de quantité d'exposition (10) détermine la première quantité d'exposition et la deuxième quantité d'exposition sur la base d'une quantité d'exposition avec laquelle au moins une partie d'une portion d'émission de lumière de l'objet est saturée en pixels dans la première image d'exposition à un moment d'imagerie.

2. Dispositif de reconnaissance d'objet (10) selon la revendication 1, comprenant en outre :
une unité d'acquisition d'informations d'environnement (307) qui acquiert des informations d'environnement autour du dispositif de reconnaissance d'objet (10) ; et
une unité de stockage d'informations de luminance (308) qui stocke des informations de luminance d'une portion d'émission de lumière de l'objet pour chaque environnement,
dans lequel l'unité de détermination de quantité d'exposition (101) détermine la première quantité d'exposition et la deuxième quantité d'exposition par référence aux informations de luminance stockées dans l'unité de stockage d'informations de luminance (308) sur la base des informations d'environnement acquises par l'unité d'acquisition d'informations d'environnement (307).

3. Dispositif de reconnaissance d'objet (10) selon la revendication 2,
dans lequel l'unité d'acquisition d'informations d'environnement (307) acquiert des informations incluant au moins un élément parmi une zone temporelle et un emplacement dans lequel le dispositif de reconnaissance d'objet (10) est en fonctionnement, en tant qu'informations d'environnement.

4. Dispositif de reconnaissance d'objet (10) selon la revendication 1, comprenant en outre :
une unité de calcul de position tridimensionnelle (407) qui calcule une position tridimensionnelle de l'objet ; et
une unité d'acquisition d'informations de comportement (408) qui acquiert des informations de comportement concernant un comportement d'un corps mobile sur lequel est monté le dispositif de reconnaissance d'objet (10),
dans lequel l'unité d'extraction de candidat de reconnaissance (105) extrait le candidat de reconnaissance sur la base d'une position de la région de source de lumière, d'une taille de l'objet, de la position tridimensionnelle de l'objet, et des informations de comportement.

5. Dispositif de reconnaissance d'objet (10) selon la revendication 1, comprenant en outre :
une unité de correction de candidat de reconnaissance (509) qui corrige l'une au moins d'une position, d'une taille et d'une forme du candidat de reconnaissance extrait par l'unité d'extraction de candidat de reconnaissance (105),
dans lequel l'unité de traitement de reconnaissance (106) effectue le traitement de reconnaissance sur le candidat de reconnaissance corrigé par l'unité de correction de candidat de reconnaissance (509).

6. Dispositif de reconnaissance d'objet (10) selon la revendication 5,
dans lequel l'unité de correction de candidat de reconnaissance (509) corrige le candidat de reconnaissance en agrandissant le candidat de reconnaissance extrait par l'unité d'extraction de candidat de reconnaissance (105) et en réduisant le candidat de reconnaissance sur la base des informations concernant une valeur de luminance du candidat de reconnaissance agrandi,
dans lequel l'unité de correction de candidat de reconnaissance (509) estime brillance d'une portion d'émission de lumière de l'objet dans la deuxième image d'exposition, et réduit le candidat de reconnaissance sur la base d'une distribution de pixels ayant une valeur de luminance similaire à la brillance de la portion d'émission de lumière dans le candidat de reconnaissance agrandi.

7. Dispositif de reconnaissance d'objet (10) selon la revendication 1, comprenant en outre :
une unité de stockage d'informations de taille (207) dans laquelle des informations de taille indiquant une relation entre une portion d'émission de lumière de l'objet et une taille de l'objet sont stockées pour chaque type de l'objet,
dans lequel l'unité de spécification de taille (104) spécifie une taille de l'objet par référence aux informations de taille stockées dans l'unité de stockage d'informations de taille (207) sur la base d'une taille de la région de source de lumière détectée par l'unité de détection de source de lumière.
